# EUROPÄISCHE PATENTSCHRIFT

(11) **EP 4 433 723 B1**
(45) Veröffentlichungstag und Bekanntmachung des Hinweises auf die Patenterteilung: **03.06.2026**
(21) Anmeldenummer: 22821862.4
(22) Anmeldetag: 16.11.2022
(51) Int. Cl.: F16H 3/089, B60K 17/04, F16H 57/031, F16H 57/037, F16H 57/02, B60K 17/02

(54) **ELEKTRISCHES ANTRIEBSSYSTEM FÜR EIN KRAFTFAHRZEUG, INSBESONDERE FÜR EINEN KRAFTWAGEN**
ELECTRIC DRIVE SYSTEM FOR A MOTOR VEHICLE, IN PARTICULAR FOR A CAR
SYSTÈME D'ENTRAÎNEMENT ÉLECTRIQUE POUR UN VÉHICULE AUTOMOBILE, EN PARTICULIER POUR UNE VOITURE AUTOMOBILE

(30) Priorität: 18.11.2021 DE 102021005711
(43) Veröffentlichungstag der Anmeldung: 25.09.2024
(73) Patentinhaber: Daimler Truck AG, 70771 Leinfelden-Echterdingen (DE)
(72) Erfinder: STROELIN, Marc, 73765 Neuhausen (DE); LUCKMANN, Jens, 71364 Winnenden (DE); SCHNEIDER, Martin, 70734 Fellbach (DE)
(74) Vertreter: JENSEN & SON
(86) Internationale Anmeldenummer: PCT/EP2022/082140
(87) Internationale Veröffentlichungsnummer: WO 2023/088970

(56) Entgegenhaltungen:
- WO-A1-2020/114827
- CN-A- 106 382 349
- CN-U- 205 468 311

## Beschreibung

Die Erfindung betrifft ein elektrisches Antriebssystem für ein Kraftfahrzeug, insbesondere für einen Kraftwagen, gemäß dem Oberbegriff von Patentanspruch 1.

Der DE 10 2018 009 582 A1 ist ein elektrischer Achsantrieb für ein Kraftfahrzeug als bekannt zu entnehmen, mit wenigstens einem Elektromotor, mit einem von dem Elektromotor antreibbaren Differenzial und mit einem ersten Gehäuseteil, welches das Differenzialgetriebe zumindest teilweise umgibt. Vorgesehen ist auch ein separat von dem ersten Gehäuseteil ausgebildetes, zweites Gehäuseteil, welches den Elektromotor zumindest teilweise umgibt. Die CN 205 468 311 U offenbart einen Muldenkipper mit elektrischem Antriebsstrang. Die WO 2020/114827 A1 offenbart einen elektrischen Achsantrieb für ein Nutzfahrzeug. Die CN 106 382 349 A offenbart ein Doppelmotorgetriebe.

Aufgabe der vorliegenden Erfindung ist es, ein elektrisches Antriebssystem für ein Kraftfahrzeug zu schaffen, sodass eine besonders kompakte Bauweise realisiert werden kann.

Diese Aufgabe wird durch ein elektrisches Antriebssystem für ein Kraftfahrzeug mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die Erfindung betrifft ein elektrisches Antriebssystem für ein Kraftfahrzeug, insbesondere für einen Kraftwagen. Dies bedeutet, dass das vorzugsweise als Kraftwagen, ganz vorzugsweise als Nutzfahrzeug, ausgebildete Kraftfahrzeug in seinem vollständig hergestellten Zustand das elektrische Antriebssystem aufweist und mittels des elektrischen Antriebssystems, insbesondere rein, elektrisch angetrieben werden kann.

Insbesondere weist das Kraftfahrzeug in seinem vollständig hergestellten Zustand wenigstens oder genau zwei in Fahrzeuglängsrichtung hintereinander angeordnete und somit aufeinanderfolgende Achsen auf. Die jeweilige Achse weist wenigstens oder genau zwei auch als Fahrzeugräder bezeichnete Räder auf, welche insbesondere auf in Fahrzeugquerrichtung einander gegenüberliegenden Seiten des Kraftfahrzeugs angeordnet sind. Dabei ist beispielsweise das elektrische Antriebssystem einer der Achsen zugeordnet, sodass mittels des elektrischen Antriebssystems die Räder der einen Achse, denen das elektrische Antriebssystem zugeordnet ist, antreibbar sind. Wenn im Folgenden von den Rädern die Rede ist, so sind darunter, falls nichts anderes angegeben ist, die mittels des elektrischen Antriebssystems antreibbaren Räder der einen Achse, denen das elektrische Antriebssystem zugeordnet ist, zu verstehen. Die Räder sind Bodenkontaktelemente des Kraftfahrzeugs, welches in Fahrzeughochrichtung nach unten hin über die Bodenkontaktelemente an einem Boden abstützbar oder abgestützt ist. Wird das Kraftfahrzeug entlang des Bodens befahren, während das Kraftfahrzeug in Fahrzeughochrichtung nach unten hin über die Räder an dem Boden abgestützt ist, so rollen die Räder an dem Boden ab. Um das Kraftfahrzeug beispielsweise entlang des Bodens zu fahren, werden die Räder und somit das Kraftfahrzeug mittels des elektrischen Antriebssystems angetrieben. Das elektrische Antriebssystem ist somit eine elektrische Antriebsvorrichtung zum, insbesondere rein, elektrischen Antreiben der Räder und somit des Kraftfahrzeugs.

Werden im Rahmen der vorliegenden Offenbarung auch als Ordinalia bezeichnete Ordnungszahlwörter wie beispielsweise "erster", "zweiter" und so weiter verwendet, so geben die Ordnungszahlwörter, insbesondere falls nichts anderes angegeben ist, nicht notwendigerweise eine Reihenfolge an. Die Ordnungszahlwörter, falls nichts anderes angegeben ist, bedeuten nicht notwendigerweise, dass mehrere Elemente vorgesehen sein müssen. Mit anderen Worten bedeutet beispielsweise die Nennung eines ersten Elements nicht notwendigerweise, dass auch ein zweites Element vorgesehen ist oder vorgesehen sein muss. Vielmehr werden im Rahmen der vorliegenden Offenbarung Ordnungszahlwörter verwendet, um insbesondere gleiche Begriffe, auf die sich die Ordnungszahlwörter beziehen, begrifflich zu unterscheiden und somit eindeutig und widerspruchsfrei adressieren zu können.

Das elektrische Antriebssystem weist eine erste elektrische Maschine auf, welche einen ersten Rotor aufweist. Beispielsweise weist die erste elektrische Maschine einen ersten Stator auf, mittels welchem der erste Rotor antreibbar und dadurch um eine auch als erste Maschinendrehachse bezeichnete Drehachse des ersten Rotors relativ zu dem ersten Stator drehbar ist. Über den ersten Rotor kann die erste elektrische Maschine Drehmomente, insbesondere zum Antreiben des Kraftfahrzeugs und ganz insbesondere zum Antreiben der Räder bereitstellen. Das elektrische Antriebssystem weist außerdem ein einfach auch als Differenzial bezeichnetes Differenzialgetriebe auf, welches ein beispielsweise als Tellerrad oder Stirnrad ausgebildetes Differenzialrad aufweist. Das Differenzialrad ist ein Zahnrad, welches eine Verzahnung, insbesondere eine Außenverzahnung, aufweist. Über das Differenzialrad sind die von der ersten Maschine bereitstellbaren oder bereitgestellten Drehmomente in das Differenzialgetriebe einleitbei, wodurch das Differenzialgetriebe antreibbar ist. Insbesondere ist hierdurch beispielsweise das Differenzialrad um die auch als Differenzialraddrehachse bezeichnete Drehachse des Differenzialrads, insbesondere relativ zu dem Stator, drehbar. Insbesondere kann vorgesehen sein, dass das Differenzialgetriebe der zuvor genannten, einen Achse zugeordnet ist, der auch das elektrische Antriebssystem zugeordnet ist. Somit können beispielsweise über das Differenzialgetriebe die Räder der einen Achse von der elektrischen Maschine, insbesondere von dem Rotor, angetrieben werden. Wie bereits hinlänglich aus dem allgemeinen Stand der Technik bekannt ist, ist das Differenzialgetriebe dabei beispielsweise dazu ausgebildet, das jeweilige, von der ersten elektrischen Maschine über den ersten Rotor bereitgestellte Drehmoment auf die Räder zu übertragen beziehungsweise aufzuteilen. Ferner ist das Differenzialgetriebe, wie allgemein bekannt ist, vorzugsweise dazu ausgebildet, beispielsweise bei einer Kurvenfahrt des Kraftfahrzeugs unterschiedliche Drehzahlen der Räder zuzulassen, insbesondere während die Räder über das Differenzialgetriebe von der ersten elektrischen Maschine, insbesondere von dem ersten Rotor, antreibbar sind oder angetrieben werden. Insbesondere lässt das Differenzialgetriebe beispielsweise zu, dass sich das kurvenäußere Rad mit einer größeren Drehzahl dreht als das kurveninnere Rad.

Das elektrische Antriebssystem weist außerdem ein zusätzlich zu dem Differenzialgetriebe vorgesehenes Getriebe auf, welches hinsichtlich eines von der ersten elektrischen Maschinen, insbesondere von dem ersten Rotor, ausgehenden Drehmomentflusses, über welchen die Drehmomente von dem ersten Rotor auf das Differenzialrad übertragbar und über das Differenzialrad in das Differenzialgetriebe einleitbar sind, in dem Drehmomentenfluss zwischen dem ersten Rotor und dem Differenzialrad angeordnet ist. Dies bedeutet, dass das Getriebe bezogen auf den Drehmomentenfluss in dem Drehmomentenfluss und dabei stromab des ersten Rotors und stromauf des Differenzialrads angeordnet ist. Das Getriebe weist eine erste Eingangswelle auf, welche auch als erste Getriebeeingangswelle bezeichnet wird. Das Getriebe weist auch eine Ausgangswelle auf, welche auch als Getriebeausgangswelle bezeichnet wird. Die Getriebeausgangswelle ist parallel und achsversetzt zu der ersten Eingangswelle angeordnet. Hierunter ist insbesondere zu verstehen, dass die erste Eingangswelle um eine erste Eingangswellendrehachse, insbesondere versetzt zum Stator, drehbar ist und die Getriebeausgangswelle ist um eine auch als Ausgangswellendrehachse bezeichnete Drehachse der Ausgangswelle, insbesondere relativ zu dem Stator, drehbar, wobei die erste Eingangswellendrehachse und die Ausgangswellendrehachse parallel zueinander verlaufen und voneinander beabstandet sind.

Das Getriebe weist außerdem zwei koaxial zu der ersten Eingangswelle und vorzugsweise auch koaxial zueinander angeordnete Zahnräder auf, nämlich ein erstes Zahnrad und ein zweites Zahnrad. Das Getriebe weist außerdem zwei koaxial zu der Ausgangswelle und somit auch koaxial zueinander angeordnete Zahnräder auf, nämlich ein drittes Zahnrad und ein viertes Zahnrad. Beispielsweise steht das dritte Zahnrad in Eingriff mit dem ersten Zahnrad. Alternativ oder zusätzlich steht das vierte Zahnrad in Eingriff mit dem zweiten Zahnrad. Somit ist beispielsweise das dritte Zahnrad von dem ersten Zahnrad antreibbar. Alternativ oder zusätzlich ist das vierte Zahnrad von dem zweiten Zahnrad antreibbar. Beispielweise kann das erste Zahnrad und/oder das zweite Zahnrad von der ersten Eingangswelle angetrieben werden. Hierzu sind beispielsweise das erste Zahnrad und/oder das zweite Zahnrad drehmomentübertragend, insbesondere drehfest, mit der ersten Eingangswelle verbindbar oder verbunden. Ferner ist es denkbar, dass das erste Zahnrad und/oder das zweite Zahnrad auf der ersten Eingangswelle angeordnet sind. Ferner ist es denkbar, dass die Ausgangswelle von dem dritten Zahnrad und/oder von dem vierten Zahnrad antreibbar ist. Das dritte Zahnrad und/oder das vierte Zahnrad können auf der Ausgangswelle angeordnet sein. Insbesondere ist es denkbar, dass das dritte Zahnrad und/oder das vierte Zahnrad drehfest mit der Ausgangswelle verbindbar oder verbunden sind.

Das elektrische Antriebssystem umfasst außerdem ein einteilig ausgebildetes Antriebsgehäuse, in welchem die erste elektrische Maschine und das Getriebe jeweils zumindest teilweise, insbesondere zumindest überwiegend und somit zu mehr als zur Hälfte oder aber vollständig, aufgenommen sind. Dabei ist es insbesondere vorgesehen, dass der erste Rotor, das Differenzialrad, die erste Eingangswelle, die Ausgangswelle und die Zahnräder relativ zu dem Antriebsgehäuse drehbar sind. Insbesondere kann vorgesehen sein, dass der erste Stator drehfest mit dem Antriebsgehäuse verbunden, mithin drehfest an dem Antriebsgehäuse festgelegt ist. Unter dem Merkmal, dass das Antriebsgehäuse einteilig ausgebildet ist, kann insbesondere verstanden werden, dass das Antriebsgehäuse nicht etwa aus separat voneinander ausgebildeten und miteinander verbundenen Gehäuseteilen zusammengesetzt und aufgebaut ist, sondern das Antriebsgehäuse ist vorzugsweise aus einem Stück, insbesondere aus einem einzige Stück, gebildet und somit als ein Monoblock ausgebildet. Mit anderen Worten ist das Antriebsgehäuse ein integraler Körper, das heißt ein integraler und somit einstückig hergestellter beziehungsweise ausgebildeter Körper. Dabei ist es insbesondere denkbar, dass das Antriebsgehäuse durch Gießen und/oder Umformen hergestellt ist.

Das elektrische Antriebssystem umfasst außerdem ein insbesondere zusätzlich zu dem Antriebsgehäuse vorgesehenes und vorzugsweise separat von dem Antriebsgehäuse ausgebildetes Achsgehäuse, welches einteilig oder aber mehrteilig ausgebildet sein kann. Unter dem Merkmal, dass das Achsgehäuse mehrteilig ausgebildet sein kann, ist insbesondere zu verstehen, dass das Achsgehäuse aus mehreren, separat voneinander ausgebildeten und miteinander verbundenen Gehäuseelementen aufgebaut beziehungsweise zusammengesetzt sein kann. In dem Achsgehäuse ist das Differenzialgetriebe aufgenommen, insbesondere derart, dass das Differenzialrad und die Differenzialraddrehachse relativ zu dem Achsgehäuse drehbar sind. Insbesondere ist es denkbar, dass der erste Rotor, das Differenzialrad, die erste Eingangswelle, die Ausgangswelle und die Zahnräder relativ zu dem Achsgehäuse drehbar sind.

Die Drehachse des ersten Rotors, mithin die Maschinendrehachse, die Drehachse der Ausgangswelle, mithin die Ausgangswellendrehachse und die Drehachse des Differenzialrades, mithin die Differenzialraddrehachse sind parallel und achsversetzt zueinander angeordnet. Die Maschinendrehachse, die Ausgangswellendrehachse und die Differenzialraddrehachse werden zusammenfassend auch als erste Drehachsen bezeichnet. Somit ist es vorgesehen, dass die ersten Drehachsen parallel zueinander verlaufen und voneinander beabstandet sind.

Das Antriebsgehäuse und das Achsgehäuse sind mittels einer ersten Flanschverbindung unmittelbar miteinander verbunden. Hierunter ist insbesondere zu verstehen, dass das Antriebsgehäuse und das Achsgehäuse nicht etwa unter Vermittlung eines separat von dem Antriebsgehäuse und separat von dem Achsgehäuse ausgebildeten, weiteren Gehäuseelements miteinander verbunden sind, sondern das Antriebsgehäuse und das Achsgehäuse sind mittels der ersten Flanschverbindung unmittelbar miteinander verbunden. Dabei ist eine erste Flanschebene der ersten Flanschverbindung parallel zu der Drehachse des Differenzialrads angeordnet. Beispielsweise weist das Antriebsgehäuse wenigstens einen ersten Flansch auf, wobei das Antriebsgehäuse beispielsweise wenigstens einen zweiten Flansch aufweist. Der erste Flansch und der zweite Flansch werden auch als Verbindungsflansche bezeichnet und sind Flansche der ersten Flanschverbindung, wobei das Antriebsgehäuse und das Achsgehäuse über den ersten Flansch und den zweiten Flansch unmittelbar miteinander verbunden sind, beispielsweise derart, dass der erste Flansch und der zweite Flansch, insbesondere direkt, miteinander verbunden sind. Dabei kann insbesondere vorgesehen sein, dass der erste Flansch und der zweite Flansch, insbesondere direkt, miteinander verschraubt und dadurch miteinander verbunden sind. Insbesondere sind der erste Flansch und der zweite Flansch in der ersten Flanschebene miteinander verbunden, insbesondere derart, dass der erste Flansch und der zweite Flansch in der ersten Flanschebene, insbesondere direkt, aneinander abgestützt sind. Somit ist beispielsweise die erste Flanschebene eine erste Trennebene, in welcher der erste Flansch und der zweite Flansch, insbesondere direkt, aneinander abgestützt und/oder miteinander verbunden sind.

Um nun eine besonders kompakte Bauweise realisieren sowie eine Anzahl an Dichtflächen besonders geringhalten und/oder vorteilhafte, planare Dichtflächen integrieren zu können, ist es erfindungsgemäß vorgesehen, dass der erste Rotor und die, insbesondere alle, Zahnräder des Getriebes vollständig innerhalb des Antriebsgehäuses angeordnet sind.

Mit dem Begriff, dass ein Element "innerhalb des Antriebsgehäuses" ist gemeint, dass das Element nicht durch eine äußere Hüllfläche des Antriebsgehäuses hindurchragt, wobei die äußere Hüllfläche durch eine äußere Oberfläche einer Wand des Antriebsgehäuses sowie - dort, wo das Antriebsgehäuse Öffnungen oder Flansche aufweist - durch Flanschflächen oder Öffnungsflächen gebildet wird.

Das Antriebsgehäuse und das Achsgehäuse werden zusammenfassend auch als Gehäuse bezeichnet. Des Weiteren sind erfindungsgemäß ein ein erster Deckel und ein zweiter Deckel vorgesehen, wobei es vorzugsweise vorgesehen ist, dass der erste Deckel und der zweite Deckel separat voneinander ausgebildet sind. Ferner ist es vorzugsweise vorgesehen, dass der erste Deckel und der zweite Deckel separat von dem Gehäuse ausgebildet sind. Der erste Deckel und das Antriebsgehäuse sind mittels einer zweiten Flanschverbindung unmittelbar miteinander verbunden, wobei die vorherigen und folgenden Ausführungen zur ersten Flanschverbindung entsprechend auch auf die zweite Flanschverbindung übertragen werden können und umgekehrt. Der zweite Deckel und das Antriebsgehäuse sind mittels einer dritten Flanschverbindung unmittelbar miteinander verbunden, wobei die vorherigen und folgenden Ausführungen zur ersten Flanschverbindung und zur zweiten Flanschverbindung entsprechend auch auf die dritte Flanschverbindung übertragen werden können und umgekehrt. Somit weist der Deckel beispielsweise einen dritten Flansch auf, und das Antriebsgehäuse weist wenigstens einen vierten Flansch auf, wobei der dritte Flansch und der vierte Flansch Flansche der zweiten Flanschverbindung sind. Dabei sind der dritte Flansch und der vierte Flansch unmittelbar miteinander verbunden, insbesondere derart, dass der dritte Flansch und der vierte Flansch beispielsweise miteinander verschraubt und dadurch miteinander verbunden sind. Der zweite Deckel weist beispielsweise einen fünften Flansch auf, und das Antriebsgehäuse weist beispielsweise wenigstens einen sechsten Flansch auf, wobei der fünfte Flansch und der sechste Flansch Flansche der dritten Flanschverbindung sind. Dabei sind beispielsweise der fünfte Flansch und der sechste Flansch unmittelbar miteinander verbunden, insbesondere derart, dass der fünfte Flansch und der sechste Flansch unmittelbar miteinander verschraubt und dadurch miteinander verbunden sind.

Des Weiteren ist es erfindungsgemäß vorgesehen, dass eine zweite Flanschebene der zweiten Flanschverbindung sowie eine dritte Flanschebene einer dritten Flanschverbindung senkrecht zu der Drehachse des Differenzialrades, mithin zu der Differenzialraddrehachse angeordnet sind. Wie bereits zur ersten Flanschverbindung ausgeführt, ist es denkbar, dass der dritte Flansch und der vierte Flansch in der zweiten Flanschebene, insbesondere direkt, miteinander verbunden und/oder aneinander abgestützt sind. Dementsprechend ist es denkbar, dass der fünfte Flansch und der sechste Flansch der dritten Flanschebene, insbesondere direkt, miteinander verbunden und/oder aneinander abgestützt sind. Beispielsweise verlaufen die zweite Flanschebene und die dritte Flanschebene parallel zueinander, wobei die zweite Flanschebene und die dritte Flanschebene voneinander beabstandet sind. Ferner verlaufen beispielsweise die zweite Flanschebene und die dritte Flanschebene senkrecht zur ersten Flanschebene. Durch die Erfindung können die Teileanzahl und somit die Kosten, das Gewicht und der Bauraumbedarf des elektrischen Antriebsystems besonders geringgehalten werden. Außerdem kann eine Anzahl an Dichtflächen geringgehalten werden, sodass ein Abdichtaufwand und somit die Kosten in einem vorteilhaft geringen Rahmen gehalten werden können. Insbesondere kann zumindest eines der Gehäuse als ein Einschubgehäuse ausgebildet sein, insbesondere derart, dass beispielsweise die erste elektrische Maschine und/oder das Getriebe in das Antriebsgehäuse eingeschoben werden kann, insbesondere durch eine jeweilige Durchgangsöffnung hindurch, wobei beispielsweise eine erste der Durchgangsöffnungen durch den ersten Deckel und eine zweite Durchgangsöffnung durch den zweiten Deckel verschlossen ist. Alternativ oder zusätzlich kann beispielsweise das Differenzialgetriebe in das auch als Achsbrücke bezeichnete Achsgehäuse eingeschoben werden, insbesondere über eine dritte Durchgangsöffnung, welche beispielsweise dadurch verschlossen ist, dass die Gehäuse miteinander verbunden sind. Somit ist es denkbar, dass die erste Durchgangsöffnung und die zweite Durchgangsöffnung Durchgangsöffnungen des Antriebsgehäuses sind, wobei beispielsweise die Durchgangsöffnung des Antriebsgehäuses auf, insbesondere entlang der Maschinendrehachse betrachtet, einander gegenüberliegenden Seiten des Antriebsgehäuses angeordnet sein können.

Insbesondere ermöglicht die Erfindung eine einfache und bauraumgünstige Kombination der ersten elektrischen Maschine sowie eines Getriebe-Radsatzes in Form des Getriebes inklusive des beispielsweise als Achsgetriebe ausgebildeten oder auch als Achsgetriebe bezeichneten Differenzialgetriebes. Dabei ist es denkbar, dass das Antriebsgehäuse und die damit verbundenen Deckel sowie die erste elektrische Maschine und das Getriebe einer Einheit oder eine Baueinheit oder einen Verbund bilden, wobei die Einheit beziehungsweise der Verbund einfach an die Achsbrücke, mithin an das Achsgehäuse angebunden, insbesondere angeschraubt, werden kann. Ferner ist es denkbar, die erste elektrische Maschine als sogenannte, eigenständige Lösung anzuflanschen.

Um auf besonders bauraumgünstige Weise einen besonders vorteilhaften Antrieb des Kraftfahrzeugs darstellen zu können, ist es bei der Erfindung vorgesehen, dass das elektrische Antriebssystem eine zweite elektrische Maschine mit einem innerhalb des Antriebsgehäuses angeordneten, zweiten Rotor aufweist, von welchem das Differenzialrad über das Getriebe antreibbar ist. Insbesondere ist der Rotor um eine auch als zweite Maschinendrehachse bezeichnete Drehachse des zweiten Rotors relativ zu dem Antriebsgehäuse drehbar. Beispielsweise umfasst die zweite elektrische Maschine einen zweiten Stator, mittels welchem der zweite Rotor antreibbar und dadurch um die zweite Maschinendrehachse relativ zu dem zweiten Stator und relativ zu dem Antriebsgehäuse drehbar ist. Dabei ist es insbesondere denkbar, dass die Maschinendrehachsen parallel zueinander verlaufen und voneinander beabstandet sind.

Um eine besonders kompakte Bauweise des elektrischen Antriebssystems realisieren zu können, ist es bei einer Ausführungsform der Erfindung vorgesehen, dass das Getriebe eine parallel und achsversetzt zu der ersten Eingangswelle sowie parallel und achsversetzt zu der Ausgangswelle angeordnete Vorgelegewelle aufweist. Dies bedeutet insbesondere, dass die Vorgelegewelle um eine auch als Vorgelegewellendrehachse bezeichnete Drehachse der Vorgelegewelle relativ zu den Gehäusen drehbar ist, wobei die Vorgelegewellendrehachse parallel zu der ersten Eingangswellendrehachse und parallel zu der Ausgangswellendrehachse verläuft und von der ersten Eingangswellendrehachse und von der Ausgangswellendrehachse beabstandet ist. Dabei ist eine schaltbare Stirnradpaarung vorgesehen, die das erste Zahlenrad sowie ein koaxial zu der Vorgelegewelle angeordnetes, erstes Vorgelegezahnrad umfasst, wobei das Vorgelegezahnrad zusätzlich zu den Zahnrädern des Getriebes, mithin zusätzlich zu dem ersten, zweiten, dritten und vierten Zahnrad vorgesehen ist. Des Weiteren ist eine zweite schaltbare Stirnradpaarung vorgesehen, die das zweite Zahnrad sowie ein koaxial zu der Vorgelegewelle angeordnetes, zweites Vorgelegezahnrad umfasst, wobei das zweite Vorgelegezahnrad zusätzlich zu dem ersten Vorgelegezahnrad sowie zusätzlich zu dem ersten, zweiten, dritten und vierten Zahnrad des Getriebes vorgesehen ist. Dabei ist es insbesondere vorgesehen, dass das erste Zahnrad in Eingriff mit dem ersten Vorgelegezahnrad steht, und vorzugsweise steht das zweite Zahnrad in Eingriff mit dem zweiten Vorgelegezahnrad. Das erste Zahnrad und das erste Vorgelegezahnrad werden zusammenfassend auch als erste Stirnradpaarungszahnräder bezeichnet, und das zweite Zahnrad und das zweite Vorgelegezahnrad werden zusammenfassend auch als zweite Stirnradpaarungszahnräder bezeichnet. Unter dem Merkmal, dass die jeweilige Stirnradpaarung schaltbar ist, kann insbesondere folgendes verstanden werden: Zumindest oder genau eines der jeweiligen Stirnradpaarungszahnräder ist beispielsweise als ein Losrad ausgebildet, welches drehbar auf der ersten Eingangswelle oder auf der Vorgelegewelle angeordnet ist. Dabei ist es insbesondere denkbar, dass das erste Zahnrad und das zweite Zahnrad als jeweilige Losräder ausgebildet sind, welche drehbar auf der ersten Eingangswelle angeordnet sind. Ferner ist es denkbar, dass die Vorgelegezahnräder, insbesondere permanent, drehfest mit der Vorgelegewelle verbunden sind.

Unter dem Merkmal, dass zwei Elemente, wie beispielsweise das jeweilige Vorgelegezahnrad und die Vorgelegewelle, drehfest miteinander verbunden sind, ist zu verstehen, dass die Elemente koaxial zueinander angeordnet sind und dann, wenn sie drehfest miteinander verbunden sind, mit der gleichen Winkelgeschwindigkeit drehen, insbesondere wenn die Elemente angetrieben werden.

Unter dem Merkmal, dass zwei Elemente, wie beispielsweise das jeweilige Vorgelegezahnrad und die Vorgelegewelle permanent drehfest miteinander verbunden sind, ist insbesondere zu verstehen, dass nicht etwa ein Schaltelement vorgesehen ist, welches zwischen einem die Elemente drehfest miteinander verbindenden Verbindungszustand und einem Freigabezustand umschaltbar ist, in welchem das Verbindungselement eine insbesondere um die gemeinsame Rotationsachse erfolgende Relativdrehung zwischen den Elementen zulässt, sondern die Elemente sind dauerhaft, das heißt permanent beziehungsweise stets drehfest miteinander verbunden. Mit anderen Worten ist unter einer drehfesten Verbindung zweier Elemente zu verstehen, dass diese beiden Elemente koaxial zueinander angeordnet sind und derart miteinander verbunden sind, dass sie mit gleicher Winkelgeschwindigkeit drehen beziehungsweise gedreht werden, insbesondere wenn sie angetrieben werden.

Bezüglich der jeweiligen, schaltbaren Stirnradpaarung ist unter dem Merkmal, dass die jeweilige Stirnradpaarung schaltbar ist, insbesondere zu verstehen, dass eine Schalteinrichtung vorgesehen ist, welche vorzugsweise zwischen wenigstens einem ersten Koppelzustand, wenigstens einem zweiten Koppelzustand und beispielsweise wenigstens einem Entkoppelzustand umschaltbar ist. In dem ersten Koppelzustand ist mittels der Schalteinrichtung eines der Losräder drehfest mit der ersten Eingangswelle beziehungsweise mit der Vorgelegewelle verbunden, insbesondere während das andere Losrad relativ zu der ersten Eingangswelle beziehungsweise relativ zu der Vorgelegewelle, insbesondere um die erste Eingangswellendrehachse beziehungsweise um die Vorgelegewellendrehachse, drehbar ist, mithin die Schalteinrichtung eine insbesondere um die erste Eingangswellendrehachse beziehungsweise um die Vorgelegewellendrehachse erfolgende Relativdrehung zwischen dem anderen Losrad und der ersten Eingangswelle beziehungsweise Vorgelegewelle zulässt. In dem zweiten Koppelzustand ist mittels der Schalteinrichtung das andere Losrad drehfest mit der ersten Eingangswelle beziehungsweise mit der Vorgelegewelle verbunden, insbesondere während das eine Losrad insbesondere um die erste Eingangswellendrehachse beziehungsweise um die Vorgelegewellendrehachse relativ zu der ersten Eingangswelle beziehungsweise relativ zu der Vorgelegewelle drehbar ist. Der Entkoppelzustand kann beispielsweise entfallen.

In dem vorzugsweise jedoch optional vorgesehenen Entkoppelzustand der Schalteinrichtung können sowohl das eine Losrad als auch das andere Losrad insbesondere um die erste Eingangswellendrehachse beziehungsweise um die Vorgelegewellendrehachse relativ zu der ersten Eingangswelle beziehungsweise relativ zu der Vorgelegewelle gedreht werden. Mithin ist es vorzugsweise vorgesehen, dass die Schalteinrichtung in dem Entkoppelzustand sowohl ein insbesondere um die erste Eingangswellendrehachse beziehungsweise um die Vorgelegewellendrehachse erfolgende Relativdrehung zwischen dem einen Losrad und der ersten Eingangswelle beziehungsweise der Vorgelegewelle als auch eine insbesondere um die erste Eingangswellendrehachse beziehungsweise um die Vorgelegewellendrehachse erfolgende Relativdrehung zwischen dem anderen Losrad und der ersten Eingangswelle beziehungsweise Vorgelegewelle zulässt. Hierdurch kann beispielsweise auf besonders bauraumgünstige Weise eine vorteilhafte Schaltbarkeit und somit eine vorteilhafte Fahrbarkeit des Antriebssystems realisiert werden.

Eine weitere Ausführungsform zeichnet sich dadurch aus, dass die Drehachse der Vorgelegewelle, mithin die Vorgelegewellendrehachse, die Drehachse der Ausgangswelle, mithin die Ausgangswellendrehachse und die Drehachse des Differenzialrades, mithin die Differenzialraddrehachse allesamt zumindest im Wesentlichen in einer ersten gemeinsamen Ebene angeordnet sind beziehungsweise verlaufen. Hierdurch kann der Bauraumbedarf des elektrischen Antriebssystems in einem besonders geringen Rahmen gehalten werden.

Um einen besonders kompakten und somit bauraumgünstigen Aufbau des elektrischen Antriebssystems realisieren zu können, ist es in weiterer Ausgestaltung der Erfindung vorgesehen, dass das Getriebe ein die erste Stirnradpaarung und die zweite Stirnradpaarung umfassendes, erstes Teilgetriebe und ein zweites Teilgetriebe aufweist. Das zweite Teilgetriebe ist in dem Drehmomentenfluss angeordnet und im ersten Teilgetriebe nachgeschaltet. Dies bedeutet, dass das zweite Teilgetriebe stromab des ersten Teilgetriebes und insbesondere stromauf des Differenzialgetriebes, insbesondere des Differenzialrades, in dem Drehmomentenfluss angeordnet ist. Somit ist beispielsweise das Differenzialrad und somit das Differenzialgetriebe über das zweite Teilgetriebe von dem ersten Teilgetriebe antreibbar, wobei beispielsweise das zweite Teilgetriebe über das erste Teilgetriebe von dem ersten Rotor antreibbar ist, und wobei das erste Teilgetriebe von dem ersten Rotor antreibbar ist. Das zweite Teilgetriebe umfasst die Ausgangswelle und einen koaxial zu der Ausgangswelle angeordneten Planetenradsatz, welcher insbesondere zusätzlich zu den Zahnrädern und zusätzlich zu den Vorgelegezahnrädern vorgesehen ist. Insbesondere ist es vorzugsweise vorgesehen, dass auch die Vorgelegezahnräder in dem Antriebsgehäuse angeordnet sind. Ferner ist es vorzugsweise vorgesehen, dass die Vorgelegewelle in dem Antriebsgehäuse angeordnet ist. Außerdem ist es vorzugsweise vorgesehen, dass das erste Teilgetriebe und das zweite Teilgetriebe in dem Antriebsgehäuse angeordnet sind. Ganz vorzugsweise ist auch der Planetenradsatz in dem Antriebsgehäuse angeordnet.

Um den Bauraumbedarf des elektrischen Antriebssystems besonders geringhalten zu können, ist es in weiterer Ausgestaltung der Erfindung vorgesehen, dass der Planetenradsatz axial überlappend zu dem ersten Rotor angeordnet ist. Hierunter ist insbesondere zu verstehen, dass der Planetenradsatz zumindest teilweise, das heißt, dass zumindest ein insbesondere in axialer Richtung des Planetenradsatzes verlaufender Längenbereich des Planetenradsatzes in radialer Richtung des Planetenradsatzes nach außen hin zumindest durch einen in axialer Richtung des ersten Rotors verlaufenden Längenbereichs des ersten Rotors überlappt beziehungsweise überdeckt ist. Außerdem kann hierdurch eine hohe Montagefreundlichkeit realisiert werden, insbesondere dadurch, dass beispielsweise die erste elektrische Maschine und der Planetenradsatz von einer ersten Seite des Antriebsgehäuses und das restliche Getriebe von einer der ersten Seite gegenüberliegenden, zweiten Seite des Antriebsgehäuses aus montiert werden, insbesondere in das Antriebsgehäuse hineinbewegt und somit in dem Antriebsgehäuse angeordnet werden.

Um den Bauraumbedarf des elektrischen Antriebssystems besonders geringhalten zu können, ist es in weiterer Ausgestaltung der Erfindung vorgesehen, dass das erste Teilgetriebe eine koaxial zu dem zweiten Rotor angeordnete, zweite Eingangswelle umfasst. Insbesondere ist die zweite Eingangswelle um eine auch als zweite Eingangswellendrehachse bezeichnete Drehachse der zweiten Eingangswelle relativ zu dem Antriebsgehäuse drehbar. Insbesondere ist die erste Eingangswelle von dem ersten Rotor antreibbar und dadurch um die erste Eingangswellendrehachse relativ zu dem Antriebsgehäuse drehbar. Beispielsweise ist der erste Rotor, insbesondere permanent, drehfest mit der ersten Eingangswelle verbunden oder verbindbar. Alternativ oder zusätzlich ist beispielsweise der zweite Rotor, insbesondere permanent, drehfest mit der zweiten Eingangswelle verbunden oder verbindbar. Insbesondere kann die zweite Eingangswelle von dem zweiten Rotor angetrieben und dadurch in die zweite Eingangswellendrehachse relativ zu dem Antriebsgehäuse gedreht werden.

Dabei ist vorzugsweise eine dritte schaltbare Stirnradpaarung vorgesehen, die ein koaxial zu der zweiten Eingangswelle angeordnetes fünftes Zahnrad sowie das erste Vorgelegezahnrad umfasst. Ganz vorzugsweise ist eine vierte schaltbare Stirnradpaarung vorgesehen, die ein koaxial zu der zweiten Eingangswelle angeordnetes, sechstes Zahnrad sowie das zweite Vorgelegezahnrad umfasst. Dabei können die vorigen und folgenden Ausführungen zur ersten Stirnradpaarung oder zweiten Stirnradpaarung ohne Weiteres auf die dritte Stirnradpaarung und die vierte Stirnradpaarung übertragen werden. Insbesondere steht das fünfte Zahnrad in Eingriff mit dem ersten Vorgelegezahnrad. Alternativ oder zusätzlich steht das sechste Zahnrad in Eingriff mit dem zweiten Vorgelegezahnrad. Dabei können insbesondere die vorigen und folgenden Ausführungen zum ersten Zahnrad und zum zweiten Zahnrad auf das fünfte Zahnrad und das sechste Zahnrad übertragen werden und umgekehrt. Vorzugsweise sind auch das fünfte Zahnrad und das sechste Zahnrad sowie die zweite Eingangswelle in dem Antriebsgehäuse angeordnet.

Um den Bauraumbedarf besonders gering halten zu können, ist es in weitere Ausgestaltung der Erfindung vorgesehen, dass die Drehachse des ersten Rotors, mithin die erste Maschinendrehachse, und die Drehachse des zweiten Rotors, mithin die zweite Maschinendrehachse in einer zweiten gemeinsamen Ebene angeordnet sind beziehungsweise verlaufen.

Dabei hat es sich zur Realisierung eines besonders geringen Bauraumbedarfs als besonders vorteilhaft gezeigt, wenn die zweite Ebene zumindest im Wesentlichen senkrecht zu der ersten Ebene angeordnet ist beziehungsweise verläuft.

Bei einer weiteren, besonders vorteilhaften Ausführungsform der Erfindung weist das elektrische Antriebssystem einen ersten Ölraum auf, welcher zu einer Kühlung und Schmierung des ersten Rotors ausgebildet ist. Des Weiteren ist es vorzugsweise vorgesehen, dass das elektrische Antriebssystem einen separat von dem ersten Ölraum ausgebildeten, zweiten Ölraum aufweist, welcher zu einer Kühlung und Schmierung des Getriebes und des Differenzialgetriebes ausgebildet ist. Unter dem jeweiligen Ölraum ist insbesondere zu verstehen, dass der jeweilige Ölraum mit einem als Schmier- und/oder Kühlmittel fungierenden Öl versorgbar ist, insbesondere derart, dass das Öl in den jeweiligen Ölraum einleitbar ist, insbesondere derart, dass sich in dem jeweiligen Ölraum ein Ölnebel und/oder ein Ölsumpf ausbildet. In dem jeweiligen Ölraum angeordnete Bauteile planschen beispielsweise in dem Ölsumpf und/oder sind zumindest teilweise von dem Ölnebel umgeben und werden dadurch mit dem in dem jeweiligen Ölraum aufgenommenen Öl versorgt und in der Folge mittels des Öls geschmiert und/oder gekühlt. Hierdurch kann auf besonders bauraumgünstige Weise eine besonders bedarfsgerechte Kühlung und Schmierung dargestellt werden.

Um auf besonders bauraum- und kostengünstige Weise eine besonders vorteilhafte Schmierung und Kühlung realisieren zu können, ist es in weitere Ausgestaltung der Erfindung vorgesehen, dass das elektrische Antriebssystem eine mechanische, durch beziehungsweise über das Getriebe, insbesondere mechanisch, antreibbare Ölpumpe zur Versorgung des zweiten Ölraums mit Öl aufweist, wobei die mechanische Ölpumpe auf einer dem Getriebe abwandten Seite des ersten Deckels angeordnet ist. Die bedeutet, dass mittels der Ölpumpe das Öl gefördert werden kann, derart, dass das Öl dem zweiten Ölraum zuführbar, insbesondere in den ersten Ölraum einleitbar, ist.

Dabei hat es sich als besonders vorteilhaft gezeigt, wenn die mechanische Ölpumpe ein Pumpengehäuse und ein innerhalb des Pumpengehäuses angeordnetes Pumpenrad aufweist, welches vorteilhaft koaxial zu der Ausgangswelle angeordnet ist und besonders vorteilhaft mit einer Welle des zweiten Teilgetriebes verbunden ist. Somit ist beispielsweise das Pumpenrad mechanisch von der Ausgangswelle oder einer koaxial zu dieser angeordneten anderen Welle des zweiten Teilgetriebes antreibbar und dadurch insbesondere um die Ausgangswellendrehachse relativ zu den Gehäusen drehbar. Vorzugsweise ist das Pumpengehäuse separat von den Deckeln und separat von den Gehäusen ausgebildet und zumindest mittelbar, insbesondere direkt, mit einem der Gehäuse verbunden.

Um den Bauraumbedarf des elektrischen Antriebssystems besonders gering halten zu können, ist es in weiterer Ausgestaltung der Erfindung vorgesehen, dass innerhalb des Pumpengehäuses ein erster Ölkühler zum Kühlen des Öls angeordnet ist. Dadurch können insbesondere außenumfangsseitige Abmessungen des elektrischen Antriebssystems gering gehalten werden, wobei gleichzeitig das Öl vorteilhaft gekühlt werden kann.

Schließlich hat es sich als besonders vorteilhaft gezeigt, wenn das elektrische Antriebssystem ein Kühlmodul zur Versorgung des ersten Ölraums mit Öl aufweist. Dabei weist das Kühlmodul eine elektrische Pumpe auf, mittels welcher das Öl den ersten Ölraum zuführbar ist, mithin in den ersten Ölraum hineinförderbar ist. Die elektrische Pumpe ist elektrisch antreibbar. Hierunter ist insbesondere zu verstehen, dass die elektrische Pumpe ein zweites Pumpenrad und einen Elektromotor aufweist, mittels welchem das zweite Pumpenrad antreibbar ist, um dadurch das Öl zu dem und insbesondere in den ersten Ölraum zu fördern. Außerdem weist das Kühlmodul vorzugsweise einen zweiten Ölkühler auf, mittels welchem das insbesondere mittels der elektrischen Pumpe geförderte Öl gekühlt werden kann. Dabei ist das Kühlmodul auf einer dem Getriebe abgewandten Seite des Achsgehäuses angeordnet, wodurch der Bauraumbedarf besonders gering gehalten werden kann.

Offenbart ist auch ein vorzugsweise als Kraftwagen, insbesondere als Nutzfahrzeug, ausgebildetes Kraftfahrzeug, welches ein elektrisches Antriebssystem gemäß der Erfindung aufweist und somit mittels des elektrischen Antriebssystems, insbesondere rein, elektrisch angetrieben werden kann. Vorteile und vorteilhafte Ausgestaltungen des elektrischen Antriebssystems sind als Vorteile und vorteilhafte Ausgestaltungen des Kraftfahrzeugs anzusehen und umgekehrt.

Vorzugsweise ist es vorgesehen, dass innerhalb des ersten Deckels und innerhalb des Antriebsgehäuses wenigstens ein oder mehrere, von dem Öl durchströmbare Ölkanäle verlaufen, um beispielsweise das mittels der mechanischen Ölpumpe geförderte Öl zu führen und insbesondere zu verteilen, insbesondere zudem und ganz insbesondere in den zweiten Ölraum.

Weiterhin denkbar ist, dass von dem Kühlmodul wenigstens ein oder mehrere, beispielsweise als Ölschläuche ausgebildete und insbesondere von dem mittels der elektrischen Ölpumpe geförderten Öl durchströmbare Leitungselemente zumindest zu dem ersten Rotor, insbesondere zu den Rotoren, führen, um dadurch zumindest den ersten Rotor, insbesondere die Rotoren, mit dem insbesondere mittels der elektrischen Ölpumpe geförderten Öl zu versorgen. Insbesondere ist es denkbar, dass das Leitungselement beziehungsweise die Leitungselemente von dem Kühlmodul zu Starterwickelköpfen des jeweiligen Stators führen, um dadurch insbesondere die Starterwickelköpfe mit dem insbesondere mittels der elektrischen Ölpumpe geförderten Öl zu versorgen. Das jeweilige Leitungselement wird somit für eine Zuführung des Öls zu dem jeweiligen Rotor und zu den Statorwickelköpfen des jeweiligen Stators genutzt. Ferner ist es denkbar, dass wenigstens ein oder mehrere, weitere Leitungselemente vorgesehen sind, die beispielsweise als Ölschläuche ausgebildet sind und als Rückführleitungen verwendet werden, um beispielsweise das Öl von den Rotoren und den Statorwickelköpfen abzuführen, insbesondere zurück zu dem Kühlmodul. Ferner ist es möglich, dass beispielsweise als Schläuche ausgebildete oder auch als Schläuche, insbesondere als Wasserschläuche, bezeichnete Leitungen oder wenigstens eine Leitung, insbesondere von dem Kühlmodul, zu dem Stator oder den Statoren führen, wobei die Leitungen beispielsweise von einem insbesondere Wasser umfassenden und vorzugsweise flüssigen Kühlmittel durchströmbar ist, wodurch der jeweilige Stator beispielsweise mit dem Kühlmittel versorgt und dadurch gekühlt werden kann. Hierdurch kann eine besonders vorteilhafte Statorkühlung dargestellt werden.

Der in dem Pumpengehäuse der mechanischen Ölpumpe angeordnete, erste Ölkühler ist ein eigener Ölkühler der mechanischen Ölpumpe, sodass mittels des ersten Ölkühlers das mittels der mechanischen Pumpe geförderte und insbesondere hin zu dem zweiten Ölraum geförderte Öl gekühlt werden kann. Mit anderen Worten kann das mittels der mechanischen Pumpe geförderte Öl durch den ersten Ölkühler hindurchströmen, insbesondere auf seinem Weg von der mechanischen Ölpumpe zu dem zweiten Ölraum, sodass das mittels der mechanischen Ölpumpe geförderte Öl auf seinem Weg von der mechanischen Ölpumpe hin zu dem zweiten Ölraum mittels des ersten Ölkühlers gekühlt wird.

Im Rahmen der vorliegenden Offenbarung ist mit Elementen, die vollständig innerhalb des Antriebsgehäuses angeordnet sind, zu verstehen, dass diese Elemente nicht teilweise durch Flanschebenen, die durch Flanschhälften des Antriebsgehäuses definiert sind, aus dem Antriebsgehäuse herausragen, sondern ganz innerhalb eines durch Gehäusewände und Flanschebenen begrenzten Raumes des Antriebsgehäuses angeordnet sind. Vorzugsweise sind auch die dritte schaltbare Stirnradpaarung und die vierte schaltbare Stirnradpaarung sowie der Planetenradsatz vollständig innerhalb des Antriebsgehäuses angeordnet. Insbesondere sind unter den genannten Flanschhälften die zuvor genannten Flansche zu verstehen, sodass der jeweilige Flansch an jeweilige der Flanschhälften ist beziehungsweise bildet.

Weitere Vorteile, Merkmale und Einzelheiten der Erfindung ergeben sich aus der nachfolgenden Beschreibung eines bevorzugten Ausführungsbeispiels anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen, wie in Anspruch 1 definiert.

Die Zeichnung zeigt in:
- Fig. 1: eine schematische Darstellung eines elektrischen Antriebssystems für ein Kraftfahrzeug;
- Fig. 2: eine schematische Seitenansicht des Antriebssystems; und
- Fig. 3: eine weitere schematische Darstellung des elektrischen Antriebssystems.

In den Fig. sind gleiche oder funktionsgleiche Elemente mit gleichen Bezugszeichen versehen.

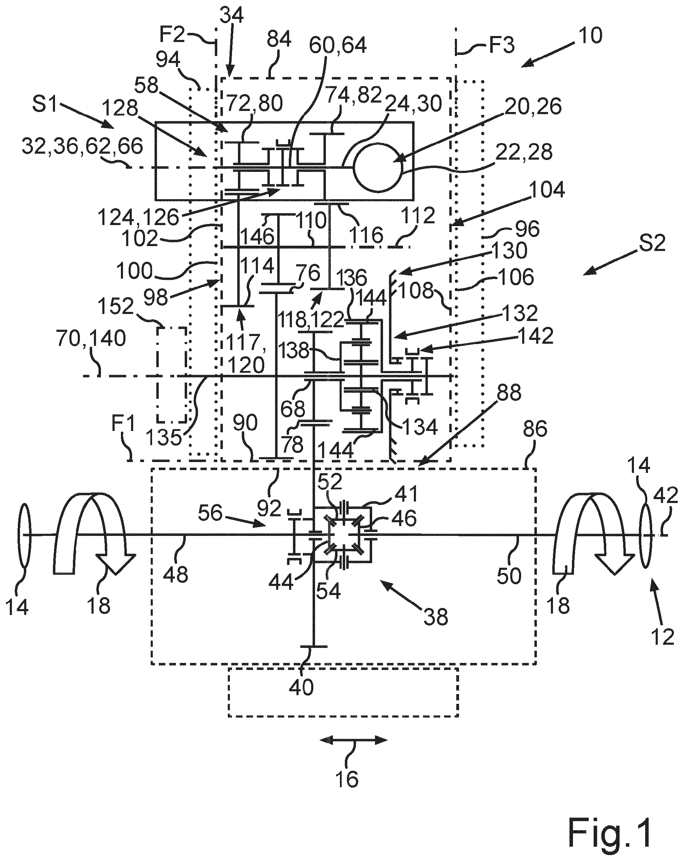

Fig. 1 zeigt in einer schematischen Darstellung ein elektrisches Antriebssystem 10 für ein Kraftfahrzeug. Dies bedeutet, dass das vorzugsweise als Kraftwagen, insbesondere als Nutzfahrzeug, ausgebildete Kraftfahrzeug in seinem vollständig hergestellten Zustand das elektrische Antriebssystem 10 aufweist und, insbesondere rein elektrisch, mittels des elektrischen Antriebssystems 10 antreibbar ist. Aus Fig. 1 ist erkennbar, dass das Antriebssystem 10 Bestandteil einer auch als Fahrzeugachse bezeichneten Achse 12 des Kraftfahrzeugs ist. Die Achse 12 weist wenigstens oder genau zwei auch als Fahrzeugräder bezeichnete Räder 14 auf, die auf in Fahrzeugquerrichtung einander gegenüberliegenden Seiten des Kraftfahrzeugs angeordnet sind. Dabei ist die Fahrzeugquerrichtung, welche auch als y-Richtung bezeichnet wird, in Fig. 1 durch einen Doppelpfeil 16 veranschaulicht. Die Räder 14 und somit das Kraftfahrzeug 1 sind mittels des elektrischen Antriebssystems 10 insbesondere rein elektrisch, antreibbar und hierdurch, wie beispielsweise in Fig. 1 durch Pfeil 18 veranschaulicht ist, drehbar, insbesondere relativ zu einem in den Figuren nicht näher dargestellten Aufbau des Kraftfahrzeugs.

Das elektrische Antriebssystem 10 weist eine erste elektrische Maschine 20 auf, welche einen ersten Stator 22 und einen ersten Rotor 24 aufweist. Des Weiteren weist das Antriebssystem 10 bei den in den Figuren gezeigten Ausführungsbeispiel eine zweite elektrische Maschine 26 mit einem zweiten Stator 28 und einem zweiten Rotor 30 auf. Der Übersicht wegen und da die elektrischen Maschinen 20 und 26 hinsichtlich ihrer Funktionen insbesondere im Hinblick auf das Antreiben des Kraftfahrzeugs sehr ähnlich oder gar gleich sind, sind in Fig. 1 die elektrischen Maschinen 20 und 26 nicht separat dargestellt, sondern deckungsgleich dargestellt. Der erste Rotor 24 ist mittels des ersten Stators 22 antreibbar und um eine erste Maschinendrehachse 32 relativ zu einer Gehäuseeinrichtung 34 des Antriebssystems 10 drehbar. Der zweite Rotor 30 ist mittels des zweiten Stators 28 antreibbar und um eine zweite Maschinendrehachse 36 relativ zu der Gehäuseeinrichtung 34 drehbar. Der Übersicht und Einfachheit wegen sind in Fig. 1 die Maschinendrehachsen 32 und 36 deckungsgleich, das heißt derart dargestellt, dass sie zusammenfallen. Tatsächlich jedoch sind die elektrischen Maschinen 20 und 26 separat voneinander ausgebildete Komponenten, sodass die elektrische Maschine 26 zusätzlich zur elektrischen Maschine 20 vorgesehen ist und umgekehrt. Dabei ist es vorgesehen, dass die Rotoren 24 und 30 parallel und achsversetzt zueinander angeordnet sind, sodass die Maschinendrehachsen 32 und 36 tatsächlich nicht zusammenfallen, sondern voneinander beabstandet sind und parallel zueinander verlaufen. Die jeweilige Maschinendrehachse 32 beziehungsweise 36 wird auch als jeweilige Drehachse des jeweiligen Rotors 24 beziehungsweise 30 bezeichnet. Die jeweilige elektrische Maschine 20 beziehungsweise 26 kann über ihren jeweiligen Rotor 24 beziehungsweise 30 Drehmomente bereitstellen zum, insbesondere rein elektrischen, Antreiben der Räder 14 und somit des Kraftfahrzeugs.

Das Antriebssystem 10 weist des Weiteren ein der Achse 12 zugeordnetes und den beiden elektrischen Maschinen 20 und 26 zugeordnetes Differenzialgetriebe 38 auf, welches auch einfach als Differenzial bezeichnet wird. Bei dem in den Figuren gezeigten Ausführungsbeispiel ist das Differenzialgetriebe 38 als ein Kegelraddifferenzial ausgebildet. Das Differenzialgetriebe 38 ist Bestandteil der Achse 12. Das Differenzialgetriebe 38 weist ein beispielsweise als Eingangsstirnrad ausgebildetes Differenzialrad 40 auf, über welches die von den elektrischen Maschinen 20, 26 über ihre Rotoren 24, 30 bereitgestellten Drehmomente in das Differenzialgetriebe 38 einleitbar sind, wodurch das Differenzialgetriebe 38 antreibbar ist. Mit andere Worten können die elektrischen Maschinen 20 und 26 über ihre Rotoren 24 und 30, insbesondere mittels der zuvor genannten Drehmomente, das Differenzialrad 40 und somit das Differenzialgetriebe 38 antreiben, wodurch das Differenzialrad 40 beziehungsweise das Differenzialgetriebe 38 insgesamt um eine Differenzialraddrehachse 42 relativ zu der Gehäuseeinrichtung 34 drehbar ist. Die Differenzialraddrehachse 42 wird auch als Drehachse des Differenzialrads 40 bezeichnet.

Vorteilhaft ist es hier vorgesehen, dass die Differenzialraddrehachse 42 parallel zu den Maschinendrehachsen 32, 36 verläuft und von den Maschinendrehachsen 32, 36 beabstandet ist. Es ist erkennbar, dass die von den elektrischen Maschinen 20 und 26 über ihre Rotoren 24 und 30 bereitgestellten Drehmomente über das Differenzialgetriebe 38 auf die Räder 14 übertragen und insbesondere aufgeteilt oder verteilt werden können, sodass die Räder 14 von dem Differenzialgetriebe 38 und über das Differenzialgetriebe 38 von den Rotoren 24 und 30 antreibbar sind. Das Differenzialgetriebe 38 weist dabei einen Differenzialkorb 41 auf, welcher, insbesondere permanent, drehfest mit dem Differenzialrad 40 verbunden und somit mit dem Differenzialrad 40 um die Differenzialraddrehachse 42 relativ zu der Gehäuseeinrichtung 34 drehbar ist. Das Differenzialgetriebe 38 weist vorliegend als Kegelräder ausgebildete Abtriebszahnräder 44 und 46 auf. Ein erstes Abtriebszahnrad 44 der Abtriebszahnräder 44, 46 ist, insbesondere permanent, drehfest mit einer ersten Seitenwelle 48 verbunden, sodass das bezogen auf die Bildebene von Fig. 1 linke der Räder 14 über die Seitenwelle 48 von dem ersten Abtriebszahnrad 44 antreibbar ist. Ein zweites Abtriebszahnrad 46 der Abtriebszahnräder 44, 46 ist, insbesondere permanent, drehfest mit einer zweiten Seitenwelle 50 verbunden, sodass das bezogen auf die Bildebene von Fig. 1 rechte der Räder 14 über die Seitenwelle 50 von dem zweiten Abtriebszahnrad 46 antreibbar ist. Die Abtriebszahnräder 44 und 46 stehen in Eingriff mit beispielsweise als Kegelräder ausgebildeten Ausgleichszahnrädern 52 und 54 des Differenzialgetriebes 38. Die Ausgleichszahnräder 52 und 54 sind drehbar an dem Differenzialkorb 41 gehalten und mit dem Differenzialkorb 41 und dem Differenzialrad 40 um die Differenzialraddrehachse 42 relativ zu der Gehäuseeinrichtung 34 mitdrehbar. Somit sind die Abtriebszahnräder 44 und 46 und mit diesen die Seitenwellen 48 und 50 von den Ausgleichszahnrädern 52 und 54 und über diese von dem Differenzialkorb 41 und Differenzialrad 40 antreibbar.

Bei dem in den Figuren gezeigten Ausführungsbeispiel weist das Differenzialgetriebe 38 vorteilhaft eine Differenzialsperre 56 auf, mittels welcher das Differenzialgetriebe 38, insbesondere vollständig, gesperrt werden kann, sodass dann die Ausgleichzahnräder 52 und 54 und die Abtriebszahnräder 44 und 46 mit dem Differenzialkorb 41 und dem Differenzialrad 40 als Block mitumlaufen.

Das elektrische Antriebssystem 10 weist des Weiteren ein zusätzlich zu dem Differenzialgetriebe 38 vorgesehenes Getriebe 58 auf, welches hinsichtlich eines von der jeweiligen elektrischen Maschine 20 beziehungsweise 26 ausgehenden Drehmomentenflusses, über welchen die Drehmomente von dem jeweiligen Rotor 24 beziehungsweise 30 auf das Differenzialgetriebe 38 und dabei auf das Differenzialrad 40 übertragbar und über das Differenzialrad 40 in das Differenzialgetriebe 38 einleitbar sind, in dem Drehmomentenfluss zwischen den Rotoren 24 und 30 und dem Differenzialrad 40 angeordnet ist. Dies bedeutet, dass das Getriebe 58 in dem Drehmomentenfluss stromab der Rotoren 24 und 30 und stromauf des Differenzialrades 40 angeordnet ist.

Das Getriebe 58 weist eine erste Eingangswelle 60 auf, welche vorliegend von dem ersten Rotor 24 antreibbar und dadurch um eine erste Eingangswellendrehachse 62 relativ zu der Gehäuseeinrichtung 34 drehbar ist. Bei dem in Fig. 1 gezeigten Ausführungsbeispiel fällt die erste Eingangswellendrehachse 62 mit der ersten Maschinendrehachse 32 zusammen, da die erste Eingangswelle 60 koaxial zu dem ersten Rotor 24 angeordnet ist. Dabei ist es insbesondere vorgesehen, dass die erste Eingangswelle 60, insbesondere permanent, drehfest mit dem ersten Rotor 24 verbunden ist.

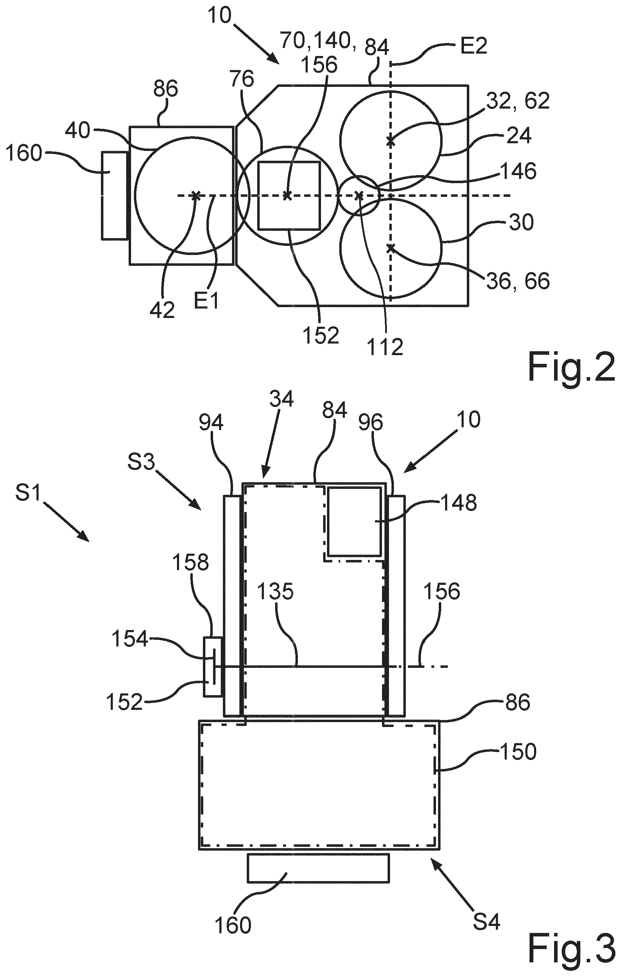

Da bei dem in Fig. 1 gezeigten Ausführungsbeispiel auch die zweite elektrische Maschine 26 vorgesehen ist, weist das Getriebe 58 auch eine zweite Eingangswelle 64 auf, welche um eine zweite Eingangswellendrehachse 66 relativ zu der Gehäuseeinrichtung 34 drehbar ist. Aufgrund der vereinfachten Darstellung von Fig. 1 sind die Eingangswellendrehachsen 62 und 66 zusammenfallend abgebildet. Tatsächlich jedoch, und in der in Fig. 2 gezeigten Seitenansicht erkennbar, ist es vorgesehen, dass die Eingangswellendrehachsen 62 und 66 parallel zueinander verlaufen und voneinander beabstandet sind. Vorzugsweise ist es vorgehen, dass die Eingangswellendrehachse 66 mit der zweiten Maschinendrehachse 36 zusammenfällt, und dass vorzugsweise die zweite Eingangswelle 64 koaxial zu dem zweiten Rotor 30 angeordnet ist. Insbesondere ist es vorgesehen, dass die zweite Eingangswelle 64, insbesondere permanent, drehfest mit dem zweiten Rotor 30 verbunden ist. Vorgesehen ist, dass die zweite Eingangswelle 64 von dem zweiten Rotor 30 antreibbar und dadurch um die zweite Eingangswellendrehachse 66 relativ zu der Gehäuseeinrichtung 34 drehbar ist.

Das Getriebe 58 weist auch eine parallel und achsversetzt zu den Eingangswellen 60 und 64 angeordnete Ausgangswelle 68 auf, welche um eine Ausgangswellendrehachse 70 relativ zu der Gehäuseeinrichtung 34 drehbar ist. Somit verläuft die Ausgangswellendrehachse 70 parallel zu den Maschinendrehachsen 32 und 36 und parallel zu den Eingangswellendrehachsen 62 und 66, wobei die Ausgangswellendrehachse 70 von den Maschinendrehachsen 32 und 36 und von den Eingangswellendrehachsen 62 und 66 beabstandet ist.

Das Getriebe 58 weist zwei koaxial zu der ersten Eingangswelle 60 angeordnete Zahnräder 72 und 74 auf, wobei das Zahnrad 72 auch als erstes Zahnrad und das Zahnrad 74 auch als zweites Zahnrad bezeichnet wird. Außerdem umfasst das Getriebe 58 koaxial zu der Ausgangswelle 68 angeordnete Zahnräder 76 und 78, wobei das Zahnrad 76 auch als drittes Zahnrad und das Zahnrad 78 auch als viertes Zahnrad bezeichnet wird. Bei dem in Fig. 1 gezeigten Ausführungsbeispiel weist das Getriebe 58 außerdem ein fünftes Zahnrad 80 und ein sechstes Zahnrad 82 auf. Die Zahnräder 80 und 82 sind koaxial zu der zweiten Eingangswelle 64 angeordnet.

Das elektrische Antriebssystem 10 weist des Weiteren ein einteilig ausgebildetes Antriebsgehäuse 84 auf, welches auch als Achseinschubgehäuse bezeichnet wird. In dem Antriebsgehäuse 84 sind die elektrischen Maschinen 20 und 26 und das Getriebe 58 jeweils zumindest teilweise, insbesondere jeweils zumindest überwiegend und somit jeweils zumindest zu mehr als zur Hälfte oder aber jeweils vollständig, aufgenommen.

Des Weiteren umfasst das Antriebssystem 10 ein auch als Achsbrücke bezeichnetes Achsgehäuse 86, welches vorzugsweise separat von dem Antriebsgehäuse 84 ausgebildet und mit dem Antriebsgehäuse 84 verbunden ist. In dem Achsgehäuse 86 ist das Differenzialgetriebe 38, insbesondere vollständig, aufgenommen. Die auch als Drehachse des ersten Rotors 24 bezeichnete, erste Maschinendrehachse 32, die auch als Drehachse des zweiten Rotors 30 bezeichnete, zweite Maschinendrehachse 36, die auch als Drehachse der Ausgangswelle 68 bezeichnete Ausgangswellendrehachse 70 und die auch als Drehachse des Differenzialrades 40 bezeichnete Differenzialraddrehachse 42 sind parallel und achsversetzt zueinander angeordnet, mithin verlaufen parallel zueinander und sind voneinander beabstandet.

Des Weiteren ist es vorgesehen, dass das Antriebsgehäuse 84 und das Achsgehäuse 86 mittels einer ersten Flanschverbindung 88 unmittelbar miteinander verbunden sind. Die erste Flanschverbindung 88 umfasst genau einen ersten Flansch 90 des Antriebsgehäuses 84 und genau einen zweiten Flansch 92 des Achsgehäuses 86, wobei die Flansche 90 und 92 in einer ersten Flanschebene F1 der ersten Flanschverbindung 88 unmittelbar miteinander verbunden, insbesondere unmittelbar miteinander verschraubt, sind. Es ist erkennbar, dass die erste Flanschebene F1 der ersten Flanschverbindung 88 parallel zu der Differenzialraddrehachse 42 verläuft und dabei von der Differenzialraddrehachse 42 beabstandet ist. Außerdem ist es vorzugsweise vorgesehen, dass die erste Flanschebene F1 parallel zu den Maschinendrehachsen 32 und 36, parallel zu den Eingangswellendrehachsen 62 und 66 und parallel zu der Ausgangswellendrehachse 70 verläuft und von den Maschinendrehachsen 32 und 36, von den Eingangswellendrehachsen 62 und 66 und von der Ausgangswellendrehachse 70 beabstandet ist.

Um nun eine besonders kompakte Bauweise des elektrischen Antriebssystems 10 realisieren zu können, ist es des Weiteren vorgesehen, dass der erste Rotor 24, der zweite Rotor 30 und die, insbesondere alle, Zahnräder 72, 74, 76, 78, 80 und 82 des Getriebes 58 vollständig innerhalb des Antriebsgehäuses 84 angeordnet sind.

Das elektrische Antriebssystem umfasst dabei einen ersten Deckel 94 und einen zweiten Deckel 96. Das Antriebsgehäuse 84 und das Achsgehäuse 86 werden auch als Gehäuse oder Gehäuseteile bezeichnet, wobei das Antriebsgehäuse 84 und das Achsgehäuse 86 Bestandteile, mithin Gehäuse der Gehäuseeinrichtung 34 sind. Die Deckel 94 und 96, welche ebenfalls Bestandteile der Gehäuseeinrichtung 34 sind, sind separat voneinander und separat von den Gehäusen, das heißt separat von dem Antriebsgehäuse 84 und separat von dem Achsgehäuse 86 ausgebildet. Es ist erkennbar, dass der erste Deckel 94 auf einer ersten Seite S1 des Antriebsgehäuses 84 angeordnet ist, und der zweite Deckel 96 ist auf einer zweiten Seite S2 des Antriebsgehäuses 84 angeordnet, wobei die Seiten S1 und S2 in axialer Richtung des Getriebes 58 und somit entlang der jeweiligen Eingangswellendrehachse 62 beziehungsweise 66 und entlang der Ausgangswellendrehachse 70 betrachtet einander gegenüberliegen beziehungsweise voneinander wegweisen. Durch den Deckel 94 ist eine auf der Seite S1 angeordnete, erste Durchgangsöffnung des Antriebsgehäuses 84 vollständig verschlossen. Zusätzlich ist durch den zweiten Deckel 96 eine auf der zweiten Seite S2 angeordnete, zweite Durchgangsöffnung des Antriebsgehäuses 84 vollständig verschlossen.

Der erste Deckel 94 und das Antriebsgehäuse 84 sind mittels einer zweiten Flanschverbindung 98 unmittelbar miteinander verbunden. Die zweite Flanschverbindung 98 umfasst genau einen dritten Flansch 100 des Deckels 94 und genau einen vierten Flansch 102 des Antriebsgehäuses 84, wobei die Flansche 100 und 102 in einer zweiten Flanschebene F2 der zweiten Flanschverbindung 98 unmittelbar miteinander verbunden, insbesondere unmittelbar miteinander verschraubt, sind. Der zweite Deckel 96 und das Antriebsgehäuse 84 sind mittels einer dritten Flanschverbindung 104 unmittelbar miteinander verbunden. Die dritte Flanschverbindung 104 umfasst genau einen fünften Flansch 106 des zweiten Deckels 96 und genau einen sechsten Flansch 108 des Antriebsgehäuses 84, wobei die Flansche 106 und 108 in einer dritten Flanschebene F3 der dritten Flanschverbindung 104 unmittelbar miteinander verbunden, insbesondere unmittelbar miteinander verschraubt, sind.

Aus Fig. 1 ist erkennbar, dass die zweite Flanschebene F2 der zweiten Flanschverbindung 98 und die dritte Flanschebene F3 der dritten Flanschverbindung 104 senkrecht zur Differenzialraddrehachse 42 verlaufen.

Außerdem sind die zweite Flanschebene F2 der zweiten Flanschverbindung 98 und die dritte Flanschebene F3 der dritten Flanschverbindung 104 vorliegend parallel zueinander und voneinander beabstandet angeordnet.

Das Getriebe 58 weist eine Vorgelegewelle 110 auf, welche um eine Vorgelegewellendrehachse 112 relativ zu der Gehäuseeinrichtung 34 drehbar ist. Es ist erkennbar, dass die Vorgelegewellendrehachse 112 parallel zu den Maschinendrehachsen 32 und 63, parallel zu den Eingangswellendrehachsen 62 und 66, parallel zu der Ausgangswellendrehachse 70 und parallel zu der Differenzialraddrehachse 42 verläuft und dabei von den Maschinendrehachsen 32 und 36, von den Eingangswellendrehachsen 62 und 66, von der Ausgangswellendrehachse 70 und von der Differenzialraddrehachse 42 beabstandet ist. Dabei ist eine erste schaltbare Stirnradpaarung 117 vorgesehen, welche das erste Zahnrad 72 und ein koaxial zu der Vorgelegewelle 110 angeordnetes, erstes Vorgelegezahnrad 114 aufweist.

Bei dem in Fig. 1 gezeigten Ausführungsbeispiel ist das erste Vorgelegezahnrad 114 permanent drehfest mit der Vorgelegewelle 110 verbunden. Außerdem kämmt das Vorgelegezahnrad 114 mit dem ersten Zahnrad 72. Mit anderen Worten steht das Zahnrad 72 in Eingriff mit dem ersten Vorgelegezahnrad 114.

Des Weiteren ist eine zweite schaltbare Stirnradpaarung 118 vorgesehen, welche das zweite Zahnrad 74 und ein zweites Vorgelegezahnrad 116 aufweist. Das zweite Vorgelegezahnrad 116 ist koaxial zu der Vorgelegewelle 110 und somit koaxial zu dem ersten Vorgelegezahnrad 114 angeordnet. Bei dem in Fig. 1 gezeigten Ausführungsbeispiel ist das zweite Vorgelegezahnrad 116, insbesondere permanent, drehfest mit der Vorgelegewelle 110 verbunden. Außerdem steht das zweite Zahnrad 74 in Eingriff mit dem zweiten Vorgelegezahnrad 116.

Bei dem in Fig. 1 gezeigten Ausführungsbeispiel ist eine dritte schaltbare Stirnradpaarung 120 vorgesehen, welche das fünfte Zahnrad 80 sowie das erste Vorgelegezahnrad 114 umfasst. Dabei steht das fünfte Zahnrad 80 in Eingriff mit dem Vorgelegezahnrad 114, wobei vorzugsweise das fünfte Zahnrad 80 nicht mit dem ersten Zahnrad 72 in Eingriff steht. Des Weiteren ist eine vierte schaltbare Stirnradpaarung 122 vorgesehen, welche das sechste Zahnrad 82 und das zweite Vorgelegezahnrad 116 umfasst. Dabei steht das sechste Zahnrad 82 in Eingriff mit dem zweiten Vorgelegezahnrad 116, wobei es vorzugsweise vorgesehen ist, dass das sechste Zahnrad 82 nicht mit dem zweiten Zahnrad 74 in Eingriff steht.

Bei dem in Fig. 1 gezeigten Ausführungsbeispiel sind die Zahnräder 72, 74, 80 und 82 als schaltbare Losräder ausgebildet. Alternativ könnten auch, wie dem Fachmann bekannt ist, die Vorgelegezahnräder 114, 116 als schaltbare Losräder ausgebildet sein. Dem Fachmann ist bekannt, dass bei einer schaltbaren Stirnradpaarung, bei der zwei Zahnräder miteinander kämmen, mindestens eines der beiden kämmenden Zahnräder als ein schaltbares Losrad ausgebildet sein muss, wobei das andere dieser beiden Zahnräder im Normalfall als ein Festrad ausgebildet ist.

Bei dem in Fig. 1 gezeigten Ausführungsbeispiel sind die Zahnräder 72 und 74 koaxial zu und drehbar auf der ersten Eingangswelle 60 angeordnet, und die Zahnräder 80 und 82 sind koaxial zu und drehbar auf der zweiten Eingangswelle 64 angeordnet.

Den als Losrädern ausgebildeten Zahnrädern 72 und 74 ist eine erste Schalteinrichtung 124 zugeordnet, welche zwischen wenigstens einem ersten Koppelzustand, wenigstens einem zweiten Koppelzustand und wenigstens einem ersten Entkoppelzustand umschaltbar ist. In dem ersten Koppelzustand ist mittels der Schalteinrichtung 124 das erste Zahnrad 72 drehfeste mit der Eingangswelle 60 verbunden, während das zweite Zahnrad 74 um die Eingangswellendrehachse 62 relativ zu der Eingangswelle 60 drehbar ist. In dem zweiten Koppelzustand ist mittels der Schalteinrichtung 124 das Zahnrad 74 drehfest mit der Eingangswelle 60 verbunden, während das Zahnrad 72 um die Eingangswellendrehachse 62 relativ zu der Eingangswelle 60 drehbar ist. In dem ersten Entkoppelzustand sind beide Zahnräder 72 und 74 um die Eingangswellendrehachse 62 relativ zu der Eingangswelle 60 drehbar. Die erste Schalteinrichtung 124 ist somit im Ausführungsbeispiel als eine kombinierte Schalteinrichtung für beide Zahnräder 72 und 74 ausgebildet. Alternativ, und an sich auf ebenfalls bekannte Weise, könnte jedes der beiden Zahnräder 72 und 74 eine eigene Schalteinrichtung erhalten.

Den als Losrädern ausgebildeten Zahnrädern 80 und 82 ist eine zweite Schalteinrichtung 126 zugeordnet, welche zwischen einem dritten Koppelzustand, einem vierten Koppelzustand und einem zweiten Entkoppelzustand umschaltbar ist. In dem dritten Koppelzustand ist mittels der Schalteinrichtung 126 das fünfte Zahnrad 80 drehfest mit der Eingangswelle 64 verbunden, während das sechste Zahnrad 82 um die Eingangswellendrehachse 62 relativ zu der Eingangswelle 64 drehbar ist. In dem vierten Koppelzustand ist mittels der Schalteinrichtung 126 das fünfte Zahnrad 82 drehfest mit der Eingangswelle 64 verbunden, während das Zahnrad sechste 80 um die Eingangswellendrehachse 66 relativ zu der Eingangswelle 64 drehbar ist. in dem zweiten Entkoppelzustand sind beide Zahnräder 80 und 82 relativ zu der Eingangswelle 64 um die Eingangswellendrehachse 66 drehbar. Insbesondere umfasst beispielsweise die jeweilige Schalteinrichtung 124, 126 eine jeweilige Schaltmuffe, welche insbesondere entlang der jeweiligen Eingangswellendrehachse 62, 66 relativ zu der jeweiligen Eingangswelle 60, 64 verschiebbar ist, insbesondere zwischen jeweiligen, die jeweiligen Koppelzustände bewirkenden Koppelstellungen und einer jeweiligen, den jeweiligen Entkoppelzustand bewirkenden Entkoppelstellung.

Des Weiteren ist es vorzugsweise vorgesehen, dass die auch als Drehachse der Vorgelegewelle 110 bezeichneten Vorgelegewellendrehachse 112, die Ausgangswellendrehachse 70 und die Differenzialraddrehachse 42 in einer ersten gemeinsamen Ebene angeordnet sind.

Das Getriebe 58 weist ein erstes Teilgetriebe 128 auf, welches zumindest die erste schaltbare Stirnradpaarung 117 und die zweite schaltbare Stirnradpaarung 118 umfasst. Im Ausführungsbeispiel der Fig. 1 ist es so, dass das erste Teilgetriebe 128 auch die dritte schaltbare Stirnradpaarung 120 und die vierte schaltbare Stirnradpaarung 122 umfasst.

Es ist erkennbar, dass auch die Vorgelegewelle 110 und die Vorgelegezahnräder 114 und 116, insbesondere jeweils vollständig, in dem Antriebsgehäuse 84 angeordnet sind.

Das Getriebe 58 weist bei dem in Fig. 1 gezeigten Ausführungsbeispiel außerdem ein zweites Teilgetriebe 130 auf, welches in dem Drehmomentenfluss angeordnet und hinsichtlich des Drehmomentenflusses dem ersten Teilgetriebe 128 nachgeschaltet ist. Dies bedeutet, dass die Teilgetriebe 128 und 130 in dem Drehmomentenfluss angeordnet sind, wobei das Teilgetriebe 130 stromab des Teilgetriebes 128 und stromauf des Differenzialrades 40 angeordnet ist.

Das zweite Teilgetriebe 130 umfasst die Ausgangswelle 68 und, besonders voreilhaft, einen koaxial zu der Ausgangswelle 68 angeordneten Planetenradsatz 132.

Der Planetenradsatz 132 weist, seinerseits besonders vorteilhaft, genau ein Sonnenrad 134 auf, welches koaxial zu der Ausgangswelle 68 angeordnet ist. Das Sonnenrad 134 ist permanent drehfest mit einer Sonnenwelle 135 verbunden oder verbindbar. Der Planetenradsatz 132 weist außerdem genau ein Hohlrad 136 und genau einen, auch als Steg bezeichneten, Planetenträger 138 auf, wobei das Hohlrad 136 ein zweites Getriebeelement und der Planetenträger 138 ein drittes Getriebeelement des Planetenradsatzes 132 ist. Die Getriebeelemente des Planetenradsatzes 132 sind koaxial zueinander angeordnet und insbesondere dann, wenn sie nicht drehfest mit der Gehäuseeinrichtung 34 verbunden sind, um eine Planetenradsatzdrehachse 140 relativ zu der Gehäuseeinrichtung 34 drehbar. Ferner ist es so, dass insbesondere dann, wenn die Getriebeelemente nicht drehfest miteinander verbunden sind, die Getriebeelemente um die Planetenradsatzdrehachse 140 relativ zueinander drehbar sind. Da die Getriebeelemente koaxial zueinander und koaxial zu der Ausgangswelle 68 angeordnet sind, fällt die Planetenradsatzdrehachse 140 mit der Ausgangswellendrehachse 70 zusammen.

Bei dem in Fig. 1 gezeigten Ausführungsbeispiel ist der Planetenträger 138 permanent drehfest mit der Ausgangswelle 68 verbunden. Dabei ist die Ausgangswelle 68 eine Hohlwelle, welche von der Sonnenwelle 135 durchdrungen ist. Voreilhaft ist das Hohlrad 136 als eine zweite Hohlwelle ausgebildet, oder, insbesondere permanent, drehfest mit einer zweiten Hohlwelle verbunden, wobei vorteilhaft die Sonnenwelle 135 auch die zweite Hohlwelle durchdringt.

Dem Planetenradsatz 132 ist vorzugsweise eine dritte Schalteinrichtung 142 zugeordnet. Mittels der dritten Schalteinrichtung 142 kann der Planetenradsatz 132 geschaltet werden, so dass mittels des Planetenradsatzes zwei unterschiedliche Übersetzungen dargestellt werden können. Mittels der dritten Schalteinrichtung können vorzugsweise zwei Schaltzustände realisiert werden: zum einen eine drehfeste Verbindung zweier Elemente der Elemente des Planetenradsatzes 132, was als eine Verblockung des Planetenradsatzes 132 bezeichnet wird, zum anderen eine drehfeste Verbindung eines Elementes der Elemente des Planetenradsatzes mit der Gehäuseeinrichtung 34.

Im Ausführungsbeispiel der Fig. 1 ist die dritte Schalteinrichtung 142 zwischen wenigstens einem fünften Koppelzustand, wenigstens einem sechsten Koppelzustand und wenigstens einem dritten Entkoppelzustand umschaltbar. In dem fünften Koppelzustand ist mittels der dritten Schalteinrichtung 142 das Hohlrad 136, insbesondere über die zweite Hohlwelle, drehfest mit der Gehäuseeinrichtung 34 insbesondere mit dem Antriebsgehäuse 84, verbunden, insbesondere während das Sonnenrad 134 und der Planetenträger 138 um die Planetenradsatzdrehachse 140 relativ zueinander und relativ zu der Gehäuseeinrichtung 34 und relativ zu dem Hohlrad 136 drehbar sind. Somit ist oder fungiert die Schalteinrichtung 142 in dem fünften Koppelzustand als eine Bremse oder ein Bremsschaltelement, da in dem fünften Koppelzustand das Hohlrad 136 drehfest mit der Gehäuseeinrichtung 34 verbunden ist.

In dem sechsten Koppelzustand ist mittels der dritten Schalteinrichtung 142 das Sonnenrad 134, insbesondere über die Sonnenwelle 135, drehfest mit dem Hohlrad 136 verbunden, sodass in dem sechsten Koppelzustand mittels der Schalteinrichtung 142 der Planetenradsatz 132, das heißt die Getriebeelemente des Planetenradsatzes 132 miteinander verblockt sind. Somit ist oder fungiert die Schalteinrichtung 142 in dem sechsten Koppelzustand als ein Verblockungsschaltelement, mittels welchem die Getriebeelemente des Planetenradsatzes 132 miteinander verblockt sind, sodass insbesondere dann, wenn der Planetenradsatz 132, insbesondere über das Sonnenrad 134, angetrieben wird, die Getriebeelemente gemeinsam und somit als Block umlaufen, mithin sich gemeinsam um die Planetenradsatzdrehachse 140 relativ zu der Gehäuseeinrichtung 134 drehen.

In dem dritten Entkoppelzustand jedoch ist mittels der dritten Schalteinrichtung 142 das Hohlrad 136 weder drehfest mit der Gehäuseeinrichtung 34 noch drehfest mit dem Sonnenrad 134 verbunden, sodass in dem dritten Entkoppelzustand die dritte Schalteinrichtung 142, insbesondere paarweise, um die Planetenradsatzdrehachse 140 erfolgende Relativdrehung zwischen den Getriebeelementen des Planetenradsatzes 132 zulässt. Es ist erkennbar, dass der Planetenradsatz 132 außerdem Planetenräder 144 aufweist, welche drehbar an dem Steg gehalten sind. Das jeweilige Planetenrad 144 steht dabei in Eingriff mit dem Hohlrad 136 und mit dem Sonnenrad 134.

Bei dem in Fig. 1 gezeigten Ausführungsbeispiel ist das dritte Zahnrad 76, insbesondere permanent, drehfest mit der Sonnenwelle 135 verbunden oder verbindbar. Ferner ist es vorgesehen, dass das vierte Zahnrad 87, insbesondere permanent, drehfest mit der Ausgangswelle 68 verbunden oder verbindbar ist. Das dritte Zahnrad 76 steht in Eingriff mit einem Abtriebszahnrad 146 des Getriebes 58, wobei das Abtriebszahnrad 146, welches einfach auch als Abtriebsrad bezeichnet wird, insbesondere permanent, drehfest mit der Vorgelegewelle 110 verbunden oder verbindbar ist.

Es ist erkennbar, dass die Sonnenwelle 135 zumindest teilweise im Antriebsgehäuse 84 aufgenommen ist. Auch die Zahnräder 76 und 78 sowie das Abtriebszahnrad 146 sind, insbesondere jeweils vollständig, in dem Antriebsgehäuse 84 aufgenommen. Auch der Planetenradsatz 132 und somit dessen Getriebeelemente sind, insbesondere vollständig, in dem Antriebsgehäuse 84 aufgenommen. Ferner ist erkennbar, dass die Vorgelegewelle 110 über das jeweilige Vorgelegezahnrad 114, 116 von dem jeweiligen Zahnrad 72, 74, 80, 82 antreibbar ist, wobei das jeweilige Zahnrad 72, 74, 80, 82, insbesondere über die Schalteinrichtung 124, 126, von der Eingangswelle 60, 64 und somit von dem Rotor 24, 30 antreibbar ist.

Dabei ist das Abtriebszahnrad 146 von der Vorgelegewelle 110 antreibbar, und das dritte Zahnrad 76 ist von dem Abtriebszahnrad 146 antreibbar, wobei die Sonnenwelle 135 von dem dritten Zahnrad 76 antreibbar ist. Somit kann das jeweilige, von der jeweiligen, elektrischen Maschine 20, 26 über ihren Rotor 24, 30 bereitgestellte Drehmoment über das Zahnrad 76 auf die Sonnenwelle 135 und über diese auf das Sonnenrad 134 übertragen werden, wodurch die Sonnenwelle 135 und somit das Sonnenrad 134 antreibbar und somit um die Planetenradsatzdrehachse 140 relativ zu der Gehäuseeinrichtung 34 drehbar ist.

Das dritte Zahnrad 76 ist somit ein Eingangsrad des zweiten Teilgetriebes 130. Über dieses Eingangsrad ist das jeweilige, von der jeweiligen elektrischen Maschine 20, 26 bereitgestellte, Drehmoment in das zweite Teilgetriebe 130 einleitbar.

Das vierte Zahnrad 78 ist ein Ausgangsrad des zweiten Teilgetriebes 130. Über dieses Ausgangsrad ist das jeweilige, von der jeweiligen, elektrischen Maschine 20, 26 bereitgestellte Drehmoment aus dem Teilgetriebe 130 ausleitbar und insbesondere auf das Differenzialrad 40 übertragbar und somit über das Differenzialrad 40 in das Differenzialgetriebe 38 einleitbar, wodurch das Differenzialrad 40 beziehungsweise das Differenzialgetriebe 38 antreibbar und somit um die Differenzialraddrehachse 42 relativ zu der Gehäuseeinrichtung 34 drehbar ist.

Um den Bauraumbedarf besonders gering halten zu können, ist der Planetenradsatz 132 axial überlappend zumindest zu dem ersten Rotor 24 und vorzugsweise auch zu dem zweiten Rotor 30 angeordnet. Des Weiteren ist es vorzugsweise vorgesehen, dass die auch als Drehachse des ersten Rotors 24 bezeichnete, erste Maschinendrehachse 32 und die auch als Drehachse des zweiten Rotors 30 bezeichnete, zweite Maschinendrehachse 36 in einer gemeinsamen, zweiten Ebene angeordnet sind. Dabei ist es vorzugsweise vorgesehen, dass die erste Ebene und die zweite Ebene senkrecht zueinander verlaufen. Vorzugsweise ist eine auch mit i bezeichnete Übersetzung ausgehend von dem Differenzialrad 40 zu der jeweiligen Seitenwelle 48, 50 hin betrachtet 1, sodass sich vorzugsweise das Differenzialrad 40 und Seitenwellen 48 und 50 insbesondere bei aktivierter Differenzialsperre 56 mit der gleichen Drehzahl drehen.

Das erste Teilgetriebe 128 umfasst vorliegend auch die Vorgelegewelle 110, die Vorgelegezahnräder 114 und 116 und das Abtriebszahnrad 146, welches somit ein auch als Abtriebsrad bezeichnetes Abtriebszahnrad des ersten Teilgetriebes 128 ist. Somit wird das jeweilige, von der jeweiligen, elektrischen Maschine 20, 26 bereitgestellte Drehmoment über das Abtriebszahnrad 146 aus dem ersten Teilgetriebe 128 ausgeleitet und auf das Zahnrad 76 übertragen und darüber in das zweite Teilgetriebe 130 eingeleitet.

In Fig. 2 ist die zuvor genannte, erste gemeinsame Ebene erkennbar und mit E1 bezeichnet. Außerdem ist aus Fig. 2 die zweite gemeinsame Ebene erkennbar und mit E2 bezeichnet.

Aus Fig. 3 ist erkennbar, dass das elektrische Antriebssystem 10 einen ersten Ölraum 148 aufweist, welcher zu einer Kühlung und Schmierung der Rotoren 24 und 30 ausgebildet ist. Das elektrische Antriebssystem 10 umfasst außerdem einen separat von dem ersten Ölraum 148 ausgebildeten, zweiten Ölraum 150, der zu einer Kühlung und Schmierung des Getriebes 58 und des Differenzialgetriebes 38 ausgebildet ist. Dies bedeutet insbesondere, dass die Ölräume 148 und 150 jeweils mit einem als Öl ausgebildeten Schmier- und Kühlmittel versorgbar sind, insbesondere derart, dass das Öl in dem jeweiligen Ölraum 148, 150 einleitbar ist. Vorzugsweise ist für den ersten Ölraum 148 ein erstes Ölversorgungssystem vorgesehen, und für den zweiten Ölraum 150 ist ein von dem ersten Ölversorgungssystem getrennt ausgebildetes zweites Ölversorgungssystem vorgesehen.

Alternativ, jedoch hier nicht dargestellt, kann das Öl, mit welchem der jeweilige Ölraum 148, 150 versorgt wird, über den jeweiligen Ölraum 148, 150 beziehungsweise durch den jeweiligen Ölraum 148, 150 hindurch zu den Rotoren 24 und 30 beziehungsweise zu dem Getriebe 58 und dem Differenzialgetriebe 38 geleitet werden, um dadurch die Rotoren 24 und 30, das Getriebe 58 und das Differenzialgetriebe 38 mit dem Öl zu versorgen und hierdurch zu schmieren und zu kühlen. Bei dieser Alternative werden beide Ölräume 148, 150 mit ein und demselben Ölversorgungssystem versorgt.

Im Ausführungsbeispiel der Fig. 3 weist das elektrische Antriebssystem 10 eine mechanische, durch das Getriebe 58, insbesondere mechanisch, antreibbare Ölpumpe 152 auf, mittels welcher der zweite Ölraum 150 mit dem Öl versorgt werden kann. Dies bedeutet, dass durch Antreiben der mechanischen Ölpumpe 152 das Öl gefördert oder zudem und insbesondere in dem zweiten Ölraum 150 und/oder durch den Ölraum 150 hindurchgefördert werden kann. Dabei weist die Ölpumpe 152 ein in Fig. 3 schematisch dargestelltes Pumpenrad 154 auf, welches um eine Pumpenraddrehachse 156 relativ zu der Gehäuseeinrichtung 34 drehbar ist. Das Pumpenrad 154 ist mechanisch durch das Getriebe 58 antreibbar und dadurch um die Pumpenraddrehachse 156 relativ zu der Gehäuseeinrichtung 34 drehbar, wodurch das Öl gefördert und der zweite Ölraum 150 mit dem mittels des Pumpenrads 154 geförderten Öl versorgt wird. Dies bedeutet, dass mittels des Pumpenrads 154 das Öl gefördert wird, indem das Pumpenrad 154 angetrieben wird. Die mechanische Ölpumpe 152 weist dabei ein Pumpengehäuse 158 auf, welches ein Bestandteil der Gehäuseeinrichtung 34 sein kann. Vorteilhaft ist das Pumpengehäuse 158 separat von dem Antriebsgehäuse 84 und separat von dem Achsgehäuse 86 und auch separat von den Deckeln 94 und 96 ausgebildet. Beispielsweise ist das Pumpengehäuse 158, insbesondere unmittelbar, mit dem Antriebsgehäuse 84 verbunden. Dabei ist das Pumpenrad 154, insbesondere drehbar, in dem Pumpengehäuse 158 aufgenommen.

Bei dem in den Figuren gezeigten Ausführungsbeispiel ist das Pumpenrad 154 permanent drehfest mit der Sonnenwelle 135 verbunden. Somit ist das Pumpenrad 154 koaxial zu der Ausgangswelle 68 beziehungsweise der Sonnenwelle 135 angeordnet, sodass die Pumpenraddrehachse 156 mit der Ausgangswellendrehachse 70 und der Planetenradsatzdrehachse 140 zusammenfällt.

Des Weiteren ist aus Figuren 1 und 3 erkennbar, dass die mechanische Ölpumpe 152 und somit das Pumpengehäuse 158 und vorzugsweise auch das Pumpenrad 154 auf der Seite S1 und dabei auf einer dem Getriebe 58 abgewandten Seite S3 des ersten Deckels 94 angeordnet ist. Somit ist vorzugsweise der Deckel 94 in einer Richtung der Pumpenraddrehachse 156 betrachtet zwischen dem Pumpengehäuse 158 und dem Antriebsgehäuse 84 und dabei vorzugsweise auch zwischen dem Pumpenrad 154 und dem Antriebsgehäuse 84 angeordnet. Somit ist insbesondere denkbar, dass beispielsweise das Pumpengehäuse 158, insbesondere unmittelbar, mit dem Deckel 94 verbunden ist, insbesondere mittels einer vierten Flanschverbindung und/oder in einer vierten Flanschebene, die beispielsweise senkrecht zur Pumpenraddrehachse 156 verläuft. Des Weiteren ist es vorzugsweise vorgesehen, dass in dem Pumpengehäuse 158 der mechanischen Ölpumpe 152 ein eigener, in den Figuren nicht dargestellter Ölkühler angeordnet ist, mittels welchem das mittels des Pumpenrads 154 und somit mittels der mechanischen Ölpumpe 152 geförderte Öl gekühlt werden kann, insbesondere auf seinem Weg von dem Pumpenrad 154 beziehungsweise der Ölpumpe 152 zu dem zweiten Ölraum 150.

Außerdem weist das elektrische Antriebssystem 10 ein zusätzlich zu der mechanischen Ölpumpe 152 vorgesehenes Kühlmodul 160 auf, welches auf einer dem Getriebe 58 abgewandten Seite S4 des Achsgehäuses 86 angeordnet ist, wobei die Seite S4 von den Seiten S1, S2 und S3 wegweist. Insbesondere ist es denkbar, dass das Kühlmodul 160 separat von der Gehäuseeinrichtung 134 und separat von den Deckeln 94 und 96 ausgebildet ist. Beispielsweise ist das Kühlmodul 160, insbesondere unmittelbar, mit dem Achsgehäuse 86 verbunden. Vorzugsweise weist das Kühlmodul 160 eine in den Figuren nicht dargestellte, elektrische Pumpe auf, welche auch als elektrische Ölpumpe bezeichnet wird. Mittels der elektrischen Pumpe kann das Öl zu dem und insbesondere in den ersten Ölraum 148 gefördert werden. Mit anderen Worten kann mittels der elektrischen Ölpumpe das Öl gefördert werden, wodurch der erste Ölraum 148 mit dem mittels der elektrischen Ölpumpe beförderten Öl versorgbar ist. Wieder mit anderen Worten ausgedrückt ist somit die elektrische Pumpe und somit das Kühlmodul 160 zur Versorgung des ersten Ölraums 148 mit dem Öl ausgebildet. Dabei weist das Kühlmodul 160 einen insbesondere zusätzlich zu dem ersten Ölkühler vorgesehenem, zweiten Ölkühler auf, mittels welchem das mittels der elektrischen Ölpumpe geförderte Öl, insbesondere auf seinem Weg zu dem ersten Ölraum 148, gekühlt werden kann. Vorzugsweise sind der erste Ölraum 148 und der zweite Ölräum 150 volltständig voneinander derart getrennt, dass keinerlei Austausch von Öl von einem der beiden Ölräume 148, 150 in den anderen der beiden Ölräume 148, 150 stattfinden kann. Vorzugsweise werden in den beiden geannten Ölräumen 148 und 150 unterschiedliche Typen von Öl verwendet.

### Bezugszeichenliste

- 10: Elektrisches Antriebssystem
- 12: Achse
- 14: Rad
- 16: Doppelpfeil
- 18: Pfeil
- 20: erste elektrische Maschine
- 22: erster Stator
- 24: erster Rotor
- 26: zweite elektrische Maschine
- 28: zweiter Stator
- 30: zweiter Rotor
- 32: erste Maschinendrehachse
- 34: Gehäuseeinrichtung
- 36: zweite Maschinendrehachse
- 38: Differenzialgetriebe
- 40: Differenzialrad
- 41: Differenzialkorb
- 42: Differenzialraddrehachse
- 44: Abtriebszahnrad
- 46: Abtriebszahnrad
- 48: Seitenwelle
- 50: Seitenwelle
- 52: Ausgleichszahnrad
- 54: Ausgleichszahnrad
- 56: Differenzialsperre
- 58: Getriebe
- 60: erste Eingangswelle
- 62: erste Eingangswellendrehachse
- 64: zweite Eingangswelle
- 66: zweite Eingangswellendrehachse
- 68: Ausgangswelle
- 70: Ausgangswellendrehachse
- 72: erstes Zahnrad
- 74: zweites Zahnrad
- 76: drittes Zahnrad
- 78: viertes Zahnrad
- 80: fünftes Zahnrad
- 82: sechstes Zahnrad
- 84: Antriebsgehäuse
- 86: Achsgehäuse
- 88: erste Flanschverbindung
- 90: erster Flansch
- 92: zweiter Flansch
- 94: erster Deckel
- 96: zweiter Deckel
- 98: zweite Flanschverbindung
- 100: dritter Flansch
- 102: vierter Flansch
- 104: dritte Flanschverbindung
- 106: fünfter Flansch
- 108: sechster Flansch
- 110: Vorgelegewelle
- 112: Vorgelegenwellendrehachse
- 114: Vorgelegezahnrad
- 116: Vorgelegezahnrad
- 117: erste Stirnradpaarung
- 118: zweite Stirnradpaarung
- 120: dritte Stirnradpaarung
- 122: vierte Stirnradpaarung
- 124: Schalteinrichtung
- 126: Schalteinrichtung
- 128: erstes Teilgetriebe
- 130: zweites Teilgetriebe
- 132: Planetenradsatz
- 134: Sonnenrad
- 135: Sonnenwelle
- 136: Hohlrad
- 138: Planetenträger
- 140: Planetenradsatzdrehachse
- 142: Schaltelement
- 144: Planetenrad
- 146: Abtriebszahnrad
- 148: erster Ölraum
- 150: zweiter Ölraum
- 152: mechanische Ölpumpe
- 154: Pumpenrad
- 156: Pumpenraddrehachse
- 158: Pumpengehäuse
- 160: Kühlmodul
- E1: erste Ebene
- E2: zweite Ebene
- F1: erste Flanschebene
- F2: zweite Flanschebene
- F3: dritte Flanschebene
- S1: erste Seite
- S2: zweite Seite
- S3: dritte Seite
- S4: vierte Seite

## Patentansprüche

1. Elektrisches Antriebssystem (10) für ein Kraftfahrzeug, aufweisend:
- eine erste elektrische Maschine (20) mit einem ersten Rotor (24), über welchen Drehmomente von der ersten elektrischen Maschine (20) bereitstellbar sind,
- ein Differenzialgetriebe (38) mit einem Differenzialrad (40), über welches die Drehmomente in das Differenzialgetriebe (38) einleitbar sind,
- ein zusätzlich zu dem Differenzialgetriebe (38) vorgesehenes Getriebe (58), welches hinsichtlich eines von der ersten elektrischen Maschinen (20) ausgehenden Drehmomentflusses, über welchen die Drehmomente von dem ersten Rotor (24) auf das Differenzialrad (40) übertragbar und über das Differenzialrad (40) in das Differenzialgetriebe (38) einleitbar sind, in dem Drehmomentenfluss zwischen dem ersten Rotor (24) und dem Differenzialrad (40) angeordnet ist und eine erste Eingangswelle (60), eine parallel und achsversetzt zu der ersten Eingangswelle (60) angeordnete Ausgangswelle (68) sowie zumindest zwei koaxial zu der ersten Eingangswelle (60) angeordnete Zahnräder (72, 74), nämlich ein erstes Zahnrad (72) und ein zweites Zahnrad (74), und zwei koaxial zu der Ausgangswelle (68) angeordnete Zahnräder (76, 78), nämlich ein drittes Zahnrad (76) und ein viertes Zahnrad (78), aufweist,
- ein Antriebsgehäuse (84), in welchem die erste elektrische Maschine (20) und das Getriebe (58) jeweils zumindest teilweise aufgenommen sind,
- ein Achsgehäuse (86), in welchem das Differenzialgetriebe (38) aufgenommen ist, wobei:
∘ eine Drehachse (32) des ersten Rotors (24), eine Drehachse (70) der Ausgangswelle (68) und eine Drehachse (42) des Differenzialrades (40) parallel und achsversetzt zueinander angeordnet sind,
∘ das Antriebsgehäuse (84) und das Achsgehäuse (86) mittels einer ersten Flanschverbindung (88) unmittelbar miteinander verbunden sind,
∘ eine erste Flanschebene (F1) der ersten Flanschverbindung (88) parallel zu der Drehachse (42) des Differenzialrades (40) angeordnet ist,
wobei:
- die Zahnräder (72, 74, 76, 78) des Getriebes (58) vollständig innerhalb des Antriebsgehäuses (84) angeordnet sind,
- ein erster Deckel (94) und ein zweiter Deckel (96) vorgesehen sind,
- der erste Deckel (94) und das Antriebsgehäuse (84) mittels einer zweiten Flanschverbindung (98) unmittelbar miteinander verbunden sind,
- der zweite Deckel (96) und das Antriebsgehäuse (84) mittels einer dritten Flanschverbindung (104) unmittelbar miteinander verbunden sind,
- eine zweite Flanschebene (F2) der zweiten Flanschverbindung (98) sowie eine dritte Flanschebene (F3) der dritten Flanschverbindung (104) senkrecht zu der Drehachse (42) des Differenzialrades (40) angeordnet sind,
**dadurch gekennzeichnet, dass**:
- das Antriebsgehäuse einteilig ausgebildet ist,
- der erste Rotor (24) vollständig innerhalb des Antriebsgehäuses (84) angeordnet ist, und
- eine zweite elektrische Maschine (26) mit einem innerhalb des Antriebsgehäuses (84) angeordneten, zweiten Rotor (30) vorgesehen ist, von welchem das Differenzialrad (40) über das Getriebe (58) antreibbar ist.

2. Elektrisches Antriebssystem (10) nach Anspruch 1,
**dadurch gekennzeichnet, dass**
das Getriebe (58) eine parallel und achsversetzt zu der ersten Eingangswelle (60) sowie parallel und achsversetzt zu der Ausgangswelle (68) angeordnete Vorgelegewelle (110) aufweist, wobei eine erste schaltbare Stirnradpaarung (117) vorgesehen ist, die das erste Zahnrad (72) sowie ein koaxial zu der Vorgelegewelle (110) angeordnetes, erstes Vorgelegezahnrad (114) umfasst, und wobei eine zweite schaltbare Stirnradpaarung (118) vorgesehen ist, die das zweite Zahnrad (74) sowie ein koaxial zu der Vorgelegewelle (110) angeordnetes, zweites Vorgelegezahnrad (116) umfasst.

3. Elektrisches Antriebssystem (10) nach Anspruch 2,
**dadurch gekennzeichnet, dass**
eine Drehachse (112) der Vorgelegewelle (110), die Drehachse (70) der Ausgangswelle (68) und die Drehachse (42) des Differenzialrades (40) in einer ersten gemeinsamen Ebene (E1) angeordnet sind.

4. Elektrisches Antriebssystem (10) nach Anspruch 2 oder 3,
**dadurch gekennzeichnet, dass**
das Getriebe (58) ein die erste Stirnradpaarung (117) und die zweite Stirnradpaarung (118) umfassendes, erstes Teilgetriebe (128) und ein im Drehmomentfluss angeordnetes und hinsichtlich des Drehmomentflusses dem ersten Teilgetriebe (128) nachgeschaltetes, zweites Teilgetriebe (130) aufweist, welches die Ausgangswelle (68) und einen koaxial zu der Ausgangswelle (68) angeordneten Planetenradsatz (132) umfasst.

5. Elektrisches Antriebssystem (10) nach Anspruch 4,
**dadurch gekennzeichnet, dass**
der Planetenradsatz (132) axial überlappend zu dem ersten Rotor (24) angeordnet ist.

6. Elektrisches Antriebssystem (10) nach Anspruch 4 oder 5,
**dadurch gekennzeichnet, dass**:
- das erste Teilgetriebe (128) eine koaxial zu dem zweiten Rotor (30) angeordnete, zweite Eingangswelle (64) umfasst,
- eine dritte schaltbare Stirnradpaarung (120) vorgesehen ist, die ein koaxial zu der zweiten Eingangswelle (64) angeordnetes fünftes Zahnrad (80) sowie das erste Vorgelegezahnrad (114) umfasst, und
- eine vierte schaltbare Stirnradpaarung (122) vorgesehen ist, die ein koaxial zu der zweiten Eingangswelle (64) angeordnetes sechstes Zahnrad (82) sowie das zweites Vorgelegezahnrad (116) umfasst.

7. Elektrisches Antriebssystem (10) nach Anspruch 6,
**dadurch gekennzeichnet, dass**
die Drehachse (32) des ersten Rotors (24) und eine Drehachse (36) des zweiten Rotors (30) in einer zweiten gemeinsamen Ebene (E2) angeordnet sind.

8. Elektrisches Antriebssystem (10) nach Anspruch 7 und Anspruch 3,
**dadurch gekennzeichnet, dass**
die zweite gemeinsame Ebene (E2) senkrecht zu der ersten gemeinsamen Ebene (E1) angeordnet ist.

9. Elektrisches Antriebssystem (10) nach einem der vorhergehenden Ansprüche,
**gekennzeichnet durch**
einen ersten Ölraum (148), der zu einer Kühlung und Schmierung des ersten Rotors (24) ausgebildet ist, und einen separat von dem ersten Ölraum (148) ausgebildeten, zweiten Ölraum (150), der zu einer Kühlung und Schmierung des Getriebes (58) und des Differenzialgetriebes (38) ausgebildet ist.

10. Elektrisches Antriebssystem (10) nach Anspruch 9,
**gekennzeichnet durch**
eine mechanische, durch das Getriebe (58) antreibbare und auf einer dem Getriebe (58) abgewandten Seite (S3) des ersten Deckels (94) angeordnete Ölpumpe (152) zur Versorgung des zweiten Ölraums (150) mit Öl.

11. Elektrisches Antriebssystem (10) nach den Ansprüchen 10 und 4,
**dadurch gekennzeichnet, dass**
die mechanische Ölpumpe (152) ein Pumpengehäuse (158) und ein innerhalb des Pumpengehäuses (158) angeordnetes Pumpenrad (154) aufweist, welches koaxial zu der Ausgangswelle (68) angeordnet und mit einer Welle des Planetenradsatzes (132) drehfest verbunden ist.

12. Elektrisches Antriebssystem (10) nach Anspruch 11,
**dadurch gekennzeichnet, dass**
innerhalb des Pumpengehäuses (158) ein erster Ölkühler zum Kühlen des Öls angeordnet ist.

13. Elektrisches Antriebssystem (10) nach einem der Ansprüche 9 bis 12,
**gekennzeichnet durch**
ein eine elektrische Pumpe und einen zweiten Ölkühler aufweisendes auf einer dem Getriebe (48) abgewandten Seite (S4) des Achsgehäuses (86) angeordnetes Kühlmodul (160) zur Versorgung des ersten Ölraums (148) mit Öl.

## Claims

1. An electric drive system (10) for a motor vehicle, comprising:
- a first electric machine (20) having a first rotor (24) via which torque from the first electric machine (20) can be delivered,
- a differential gear (38) having a differential gear wheel (40) via which torque can be introduced into the differential gear (38),
- a transmission (58) provided in addition to the differential gear, which, with respect to a torque flow originating from the first electric machine (20) via which torque from the first rotor (24) can be transmitted to the differential gear wheel (40) and introduced into the differential gear (38) via the differential gear wheel (40), is disposed in the torque flow between the first rotor (24) and the differential gear wheel (40), and comprising a first input shaft (60), an output shaft (68) disposed parallel to and axially offset from the first input shaft (60), and at least two gear wheels (72, 74), namely a first gear wheel (72) and a second gear wheel (74) disposed coaxially to the first input shaft (60), and two gear wheels (76, 78), namely a third gear wheel (76) and a fourth gear wheel (78) disposed coaxially to the output shaft (68),
- a drive housing in which the first electric machine (20) and the transmission (58) are each at least partially accommodated,
- an axle housing (86) in which the differential gear (38) is accommodated, wherein:
∘ a rotation axis (32) of the first rotor (24), a rotation axis (70) of the output shaft (68), and a rotation axis (42) of the differential gear wheel (40) are disposed parallel to and axially offset from one another,
∘ the drive housing (84) and the axle housing (86) are directly connected to each other by means of a first flange connection (88),
∘ a first flange plane (F1) of the first flange connection (88) is disposed parallel to the rotation axis (42) of the differential gear wheel (40),
wherein:
- the gear wheels (72, 74, 76, 78) of the transmission (58) are disposed entirely within the drive housing (84),
- a first cover (94) and a second cover (96) are provided,
- the first cover (94) and the drive housing (84) are directly connected to each other by means of a second flange connection (98),
- the second cover (96) and the drive housing (84) are directly connected to each other by means of a third flange connection (104),
- a second flange plane (F2) of the second flange connection (98) and the third flange plane (F3) of the third flange connection (104) are disposed perpendicular to the rotation axis (42) of the differential gear wheel (40),
**characterised in that**:
- the drive housing is configured as one piece,
- the first rotor (24) is entirely disposed within the drive housing (84), and
- a second electric machine (26) having a second rotor (30) disposed within the drive housing (84) is provided, from which the differential gear wheel (40) can be driven via the transmission (58).

2. The electric drive system (10) according to claim 1,
**characterised in that**
the transmission (58) comprises a layshaft (110) disposed parallel to and axially offset from the first input shaft (60) as well as parallel to and axially offset from the output shaft (68), wherein a first shiftable spur wheel pairing (117) including the first gear wheel (72) as well as a first layshaft wheel (114) disposed coaxially to the layshaft (110) is provided, and wherein a second shiftable spur wheel pairing (118) including the second gear wheel (74) as well as a second layshaft wheel (116) disposed coaxially to the layshaft is provided.

3. The electric drive system (10) according to claim 2,
**characterised in that**
a rotation (112) of the layshaft (110), the rotation axis (70) of the output shaft (68), and the rotation axis (42) of the differential gear wheel (40) are disposed in a first common plane (E1).

4. The electric drive system (10) according to claim 2 or 3,
**characterised in that**
the transmission (58) comprises a first sub-transmission (128) including the first spur wheel pairing (117) and the second spur wheel pairing (118), and a second sub-transmission (130) disposed in the torque flow and downstream from the first sub-transmission (128) with respect to the torque flow, and which includes the output shaft (68) and a planetary wheel set (132) disposed coaxially to the output shaft (68).

5. The electric drive system (10) according to claim 4,
**characterised in that**
the planetary wheel set (132) is disposed axially overlapping the first rotor (24).

6. The electric drive system (10) according to claim 4 or 5,
**characterised in that**:
- the first sub-transmission (128) includes a second input shaft (64) disposed coaxially to the second rotor (30),
- a third shiftable spur wheel pairing (120) including a fifth gear wheel (80) disposed coaxially to the second input shaft (64), and including the first layshaft wheel (114) is provided, and
- a fourth shiftable spur wheel pairing (122) including a sixth gear wheel (82) disposed coaxially to the second input shaft (64), and including the second layshaft wheel (116) is provided.

7. The electric drive system (10) according to claim 6,
**characterised in that**
the rotation axis (32) of the first rotor (24) and a rotation axis (36) of the second rotor (30) are disposed in a second common plane (E2).

8. The electric drive system (10) according to claim 7 and claim 3,
**characterised in that**
the second common plane (E2) is disposed perpendicular to the first common plane (E1).

9. The electric drive system (10) according to one of the preceding claims,
**characterised by**
a first oil chamber (148) configured for cooling and lubricating the first rotor (24), and a second oil chamber (150) configured separately from the first oil chamber (148) and configured for cooling and lubricating the transmission (58) and the differential gear (38).

10. The electric drive system (10) according to claim 9,
**characterised by**
a mechanical oil pump (152) driveable by the transmission (58) and disposed on a side (S3) of the first cover (94) facing away from the transmission, for supplying oil to the second oil chamber (150).

11. The electric drive system (10) according to claims 10 and 4,
**characterised in that**
the mechanical oil pump (152) comprises a pump housing (158) and a pump wheel (154), which is disposed within the pump housing (158) and disposed coaxially to the output shaft (68) and non-rotationally connected to a shaft of the planetary wheel set (132).

12. The electric drive system (10) according to claim 11,
**characterised in that**
a first oil cooler for cooling the oil is disposed within the pump housing (158).

13. The electric drive system (10) according to one of claims 9 to 12,
**characterised by**
a cooling module (160) for providing oil to the first oil chamber (148), comprising an electric pump and a second oil cooler, and which is disposed on a side (S4) of the axle housing (86) facing away from the transmission (48).

## Revendications

1. Système d'entraînement électrique (10) pour un véhicule automobile, comprenant:
- un premier moteur électrique (20) comportant un premier rotor (24), au moyen duquel des couples peuvent être fournis par le premier moteur électrique (20),
- un différentiel (38) comportant une roue de différentiel (40) au moyen de laquelle les couples peuvent être transmis au différentiel (38),
- en plus du différentiel (38), un mécanisme de transmission (58) qui présente, en ce qui concerne un flux de couple provenant du premier moteur (20), au moyen desquels les couples peuvent être transmis du premier rotor (24) à la roue de différentiel (40) et, au moyen de la roue de différentiel (40), peuvent être introduits dans le différentiel (38), le flux de couple se trouvant entre le premier rotor (24) et la roue de différentiel (40) et un premier arbre d'entrée (60), un arbre de sortie (68) disposé parallèlement et décalé axialement par rapport au premier arbre d'entrée (60), et au moins deux roues dentées (72, 74) disposées coaxialement au premier arbre d'entrée (60), à savoir une première roue dentée (72) et une deuxième roue dentée (74), et deux roues dentées (76, 78) disposées coaxialement à l'arbre de sortie (68), à savoir une troisième roue dentée (76) et une quatrième roue dentée (78),
- un carter de transmission (84), dans lequel le premier moteur électrique (20) et le mécanisme de transmission (58) respectivement sont logées, au moins en partie,
- un carter d'essieu (86) dans lequel est logé le différentiel (38), dans lequel :
- un axe de rotation (32) du premier rotor (24), un axe de rotation (70) de l'arbre de sortie (68) et un axe de rotation (42) de la roue de différentiel (40) sont disposés parallèlement les uns aux autres et décalés les uns par rapport aux autres,
- le carter de transmission (84) et le carter d'essieu (86) sont directement reliés l'un à l'autre au moyen d'un premier raccord à bride (88),
- le premier plan de bride (F1) du premier raccord à bride (88) est disposé parallèlement à l'axe de rotation (42) de la roue de différentiel (40), dans lequel:
- les roues dentées (72, 74, 76, 78) du mécanisme de transmission (58) sont entièrement logés à l'intérieur du carter de transmission (84),
- il est prévu un premier couvercle (94) et un deuxième couvercle (96),
- le premier couvercle (94) et le carter de transmission (84) sont directement reliés l'un à l'autre au moyen d'un deuxième raccord à bride (98),
- le deuxième couvercle (96) et le carter de transmission (84) sont directement reliés l'un à l'autre au moyen d'un troisième raccord à bride (104),
- un deuxième plan de bride (F2) du deuxième raccord à bride (98) ainsi qu'un troisième plan de bride (F3) du troisième raccord à bride (104) sont perpendiculaires à l'axe de rotation (42) de la roue de différentiel (40),
**caractérisé en ce que** :
- le carter de transmission est conçu d'une seule pièce,
- le premier rotor (24) est entièrement logé à l'intérieur du carter de transmission (84), et
- un deuxième moteur électrique (26) comportant un deuxième rotor (30) disposé à l'intérieur du carter de transmission (84), à partir duquel la roue de différentiel (40) peut être entraînée par l'intermédiaire du mécanisme de transmission (58).

2. Dispositif d'entraînement électrique (10) selon la revendication 1,
**caractérisé en ce que**
le mécanisme de transmission (58) comporte un arbre intermédiaire (110) disposé parallèlement et en décalage axial par rapport au premier arbre d'entrée (60) ainsi que parallèlement et en décalage axial par rapport à l'arbre de sortie (68), dans lequel une première paire d'engrenages cylindriques commutables (117), qui comprend la première roue dentée (72) ainsi qu'une première roue dentée intermédiaire (114) disposée coaxialement à l'arbre intermédiaire (110), et dans lequel une deuxième paires d'engrenages cylindriques commutables (118), qui comprend la deuxième roue dentée (74) ainsi qu'une deuxième roue dentée intermédiaire (116) disposée coaxialement à l'arbre intermédiaire (110).

3. Dispositif d'entraînement électrique (10) selon la revendication 2, **caractérisé en ce qu'**
un axe de rotation (112) de l'arbre intermédiaire (110), l'axe de rotation (70) de l'arbre de sortie (68) et l'axe de rotation (42) de la roue de différentiel (40) sont disposés dans un premier plan commun (E1).

4. Dispositif d'entraînement électrique (10) selon la revendication 2 ou 3, **caractérisé en ce que**
le mécanisme de transmission (58) comprend un premier sous-ensemble de transmission (128) comprenant la première paire d'engrenages cylindriques (117) et la deuxième paire de d'engrenages cylindriques (118), ainsi qu'un deuxième sous-ensemble de transmission (130) disposé dans le sens du flux de couple et monté en aval du premier sous-ensemble de transmission (128) par rapport au flux de couple, lequel comprend l'arbre de sortie (68) et un train d'engrenages planétaires (132) disposé coaxialement à l'arbre de sortie (68).

5. Dispositif d'entraînement électrique (10) selon la revendication 4,
**caractérisé en ce que**
le train d'engrenages planétaires (132) est disposé de manière à chevaucher axialement le premier rotor (24).

6. Dispositif d'entraînement électrique (10) selon la revendication 4 ou 5, **caractérisé en ce que**
- le premier sous-ensemble de transmission (128) comprend un deuxième arbre d'entrée (64) disposé coaxialement au deuxième rotor (30),
- une troisième paires d'engrenages cylindriques commutable (120), qui comprend une cinquième roue dentée (80) disposée coaxialement au deuxième arbre d'entrée (64) ainsi que le premier engrenage intermédiaire (114), et
- une quatrième paires d'engrenages cylindriques commutable (122), qui comprend une sixième roue dentée (82) disposée coaxialement au deuxième arbre d'entrée (64) ainsi que le deuxième engrenage intermédiaire (116).

7. Dispositif d'entraînement électrique (10) selon la revendication 6,
**caractérisé en ce que**
l'axe de rotation (32) du premier rotor (24) et l'axe de rotation (36) du deuxième rotor (30) sont situés dans un deuxième plan commun (E2).

8. Dispositif d'entraînement électrique (10) selon la revendication 7 ou la revendication 3,
**caractérisé en ce que**
le deuxième plan commun (E2) est perpendiculaire au premier plan commun (E1).

9. Dispositif d'entraînement électrique (10) selon l'une quelconque des revendications précédentes,
**caractérisé par**
une première chambre d'huile (148) qui est conçue pour assurer le refroidissement et la lubrification du premier rotor (24), et une deuxième chambre d'huile (150) formée séparément de la première chambre d'huile (148) qui est conçue pour assurer le refroidissement et la lubrification du mécanisme de transmission (58) et du différentiel (38).

10. Dispositif d'entraînement électrique (10) selon la revendication 9,
**caractérisé par**
une pompe à huile (152) mécanique, entraînée par le mécanisme de transmission (58) et disposée sur un côté (S3) du premier couvercle (94) opposé au mécanisme de transmission (58), destinée à alimenter en huile la deuxième chambre d'huile (150).

11. Dispositif d'entraînement électrique (10) selon la revendication 10 ou la revendication 4,
**caractérisé en ce que**
la pompe à huile mécanique (152) comprend un carter de pompe (158) et une roue de pompe (154) disposée à l'intérieur du carter de pompe (158), laquelle est disposée coaxialement à l'arbre de sortie (68) et est reliée de manière solidaire en rotation à un arbre du train d'engrenages planétaires (132).

12. Dispositif d'entraînement électrique (10) selon la revendication 11, **caractérisé en ce que**
un premier refroidisseur d'huile est disposé à l'intérieur du carter de pompe (158) afin de refroidir l'huile.

13. Système d'entraînement électrique (10) selon l'une quelconque des revendications 9 à 12, **caractérisé par**
un module de refroidissement (160) comportant une pompe électrique et un deuxième refroidisseur d'huile, disposé sur un côté (S4) du carter d'essieu (86) opposé au mécanisme de transmission (48), destiné à alimenter en huile la première chambre d'huile (148).
